# EUROPEAN PATENT APPLICATION

(11) **EP 4 072 189 A1**
(43) Date of publication of application: **12.10.2022**
(21) Application number: 19958367.5
(22) Date of filing: 31.12.2019
(51) Int. Cl.: H04W 24/10

(54) **RADIO RESOURCE MANAGEMENT MEASUREMENT METHOD AND APPARATUS**

(71) Applicant: Huawei Technologies Co., Ltd., Shenzhen, Guangdong 518129 (CN)
(72) Inventor: YAN, Le, Shenzhen, Guangdong 518129 (CN); ZENG, Qinghai, Shenzhen, Guangdong 518129 (CN); GENG, Tingting, Shenzhen, Guangdong 518129 (CN); ZHANG, Hongping, Shenzhen, Guangdong 518129 (CN)
(74) Representative: Pfenning, Meinig & Partner mbB
(86) International application number: PCT/CN2019/130451
(87) International publication number: WO 2021/134455

(57) **Abstract**

This application provides a radio resource management measurement method and apparatus. The radio resource management measurement method includes: A network device sends measurement configuration information to a terminal device, where the measurement configuration information carries a first threshold; and the terminal device determines, based on a value relationship between a detection value and the first threshold, and signal quality of at least one neighboring cell, whether to report a measurement report. In technical solutions provided in this application, when performing RRM measurement, the terminal device can determine, based on a relationship between the first threshold and signal quality of a serving cell and/or a quantity of detected cells, and the signal quality of the at least one neighboring cell, whether to report the measurement report. This can prevent the terminal device from reporting the measurement report frequently, and avoid a case in which the terminal device does not report the measurement report in a timely manner, so that a measurement mechanism is more appropriate.

## Description

### TECHNICAL FIELD

This application relates to the communication field, and more specifically, to a radio resource management measurement method and apparatus.

### BACKGROUND

In radio resource management (radio resource management, RRM) measurement, a serving base station sends a radio resource control (radio resource control, RRC) reconfiguration message including measurement configuration information to a terminal device. For the RRM measurement, in some cases (for example, the terminal device is an uncrewed aerial vehicle at a high height), if the terminal device can detect/receive signals of a plurality of base stations, the terminal device may send a large quantity of measurement reports frequently. Therefore, an RRM measurement mechanism of the terminal device needs to be enhanced (for example, when a predefined quantity of neighboring cells all meet a corresponding measurement report triggering condition in a corresponding time to trigger, the terminal device may send a measurement report to the serving base station). This avoids problems such as implementation complexity and interference caused by frequent sending of the measurement report.

However, in an existing enhanced RRM measurement mechanism, when the terminal device is located in an edge area of a serving cell, the terminal device may fail to send the measurement report to the serving base station. Consequently, communication system performance is affected. Therefore, how to provide an appropriate RRM measurement mechanism becomes an urgent problem to be resolved.

### SUMMARY

This application provides a radio resource management measurement method and apparatus. A first threshold is carried in measurement configuration information, and a terminal device determines, based on a value relationship between a detection value and the first threshold, and signal quality of at least one neighboring cell, whether to report a measurement report. This can prevent the terminal device from reporting the measurement report frequently, and avoid a case in which the terminal device does not report the measurement report in a timely manner, so that a measurement mechanism is more appropriate.

According to a first aspect, a radio resource management measurement method is provided. The radio resource management measurement method may be performed by a terminal device or a chip or a circuit disposed in the terminal device. This is not limited in this application. For ease of description, an example in which the radio resource management measurement method is performed by the terminal device may be used for description.

The radio resource management measurement method includes:
receiving, by the terminal device, measurement configuration information from a network device, where the measurement configuration information includes a first threshold, and the first threshold includes a first serving cell signal quality threshold and/or a first detected cell quantity thresholdfirst detected cell quantity threshold; and determining, by the terminal device, based on a value relationship between a detection value and the first threshold, and signal quality of at least one neighboring cell, whether to report a measurement report. The detection value may also be referred to as a detection value in radio resource management measurement. The detection value is used to determine whether to report the measurement report. The first detected cell quantity threshold may also be referred to as a first cell quantity threshold for short.

According to the radio resource management measurement method provided in this embodiment of this application, the first serving cell signal quality threshold and/or the first detected cell quantity threshold are/is carried the measurement configuration information, and the terminal device determines, based on the value relationship between the detection value and the first threshold, and the signal quality of the at least one neighboring cell, whether to report the measurement report. In this embodiment of this application, the terminal device determines, based on signal quality of a neighboring cell and a value relationship between the signal quality of the serving cell and the first serving cell signal quality threshold and/or a value relationship between the quantity of cells that can be detected and the first detected cell quantity threshold, whether to report the measurement report. This can prevent the terminal device from reporting the measurement report frequently, and avoid a case in which the terminal device does not report the measurement report in a timely manner, so that a measurement mechanism is more appropriate.

With reference to the first aspect, in some implementations of the first aspect, the detection value includes the first serving cell signal quality, and the detection value includes the signal quality of the serving cell. The determining, by the terminal device, based on a value relationship between a detection value and the first threshold, and signal quality of at least one neighboring cell, whether to report a measurement report includes: When the signal quality of the serving cell is less than or equal to the first serving cell signal quality threshold, and the signal quality of the at least one neighboring cell meets a measurement report triggering condition, determining, by the terminal device, to report the measurement report; or when the signal quality of the serving cell is greater than or equal to the first serving cell signal quality threshold, and signal quality of N neighboring cells all meets a corresponding measurement report triggering condition, determining, by the terminal device, to report the measurement report, where N is a neighboring cell quantity threshold that is included in the configuration information.

In a possible implementation, the first threshold may be the first serving cell signal quality threshold, and the terminal device may determine, based on the value relationship between the signal quality of the serving cell and the first serving cell signal quality threshold, and whether the at least one neighboring cell meets the measurement report triggering condition in a corresponding time to trigger (time to trigger, TTT), whether to report the measurement report. When the signal quality of the serving cell is good, the terminal device may report the measurement report when all the N neighboring cells meet the corresponding measurement report triggering condition. When the signal quality of the serving cell is poor, the terminal device may report the measurement report when the at least one neighboring cell meets the corresponding measurement report triggering condition, where N is understood as the neighboring cell quantity threshold that is carried in the measurement configuration information, and N is a positive integer. Therefore, this avoids frequent reporting of the measurement report when the signal quality of the serving cell is good, and avoids a radio link failure or too late handover caused because the measurement report is not reported in a timely manner when the signal quality of the serving cell is poor.

With reference to the first aspect, in some implementations of the first aspect, the first threshold includes the first detected cell quantity threshold, and the detection value includes the quantity of detected cells. The determining, based on a value relationship between a detection value and the first threshold, and signal quality of at least one neighboring cell, whether to report a measurement report includes: When the quantity of detected cells is less than or equal to the first detected cell quantity threshold, and the signal quality of the at least one neighboring cell meets a measurement report triggering condition, determining to report the measurement report; or when the quantity of detected cells is greater than or equal to the first detected cell quantity threshold, and signal quality of N neighboring cells all meets a corresponding measurement report triggering condition, determining to report the measurement report, where N is a neighboring cell quantity thresholdthat is included in the configuration information.

In another possible implementation, the first threshold may be the first detected cell quantity threshold, and the terminal device may determine, based on the value relationship between the quantity of detected cells and the first detected cell quantity threshold, and whether the at least one neighboring cell meets the measurement report triggering condition in a corresponding TTT, whether to report the measurement report. When there are a large quantity of detected cells, the terminal device may report the measurement report when all the N neighboring cells meet the corresponding measurement report triggering condition. When there are a small quantity of detected cells, the terminal device may report the measurement report when the at least one neighboring cell meets the corresponding measurement report triggering condition. Therefore, this avoids frequent reporting of the measurement report when there are the large quantity of detected cells, and avoids a radio link failure or too late handover caused because the measurement report is not reported in a timely manner when there are the small quantity of detected cells.

In still another possible implementation, the first threshold may include both the first detected cell quantity threshold and the first serving cell signal quality threshold, and the terminal device may determine, based on the value relationship between the signal quality of the serving cell and the first serving cell signal quality threshold, the value relationship between the quantity of detected cells and the first detected cell quantity threshold, and whether the at least one neighboring cell meets a measurement report triggering condition in a corresponding TTT, whether to report the measurement report. That is, the foregoing two implementations may be combined, and details are not described herein again.

With reference to the first aspect, in some implementations of the first aspect, the first threshold is at a height granularity. The method further includes: determining, by the terminal device, the first threshold based on a height of the terminal device.

The first threshold may be a height-related value. After receiving the measurement configuration information, the terminal device can determine an appropriate first threshold based on the height of the terminal device.

With reference to the first aspect, in some implementations of the first aspect, the measurement configuration information includes a height threshold.

Based on the radio resource management measurement method provided in this embodiment of this application, the height threshold may be carried in the measurement configuration information, and the measurement configuration information is sent to the terminal device.

With reference to the first aspect, in some implementations of the first aspect, after the determining to report the measurement report, the method further includes: sending a measurement report corresponding to a first neighboring cell; starting a first timer after sending the measurement report corresponding to the first neighboring cell; and in a validity period of the first timer, skipping reporting the measurement report, or reporting a measurement report corresponding to a second neighboring cell, where signal quality of the second neighboring cell is greater than signal quality of the first neighboring cell.

Based on the radio resource management measurement method provided in this embodiment of this application, after the terminal device determines to report the measurement report, it is assumed that the measurement report reported by the terminal device is the measurement report corresponding to the first neighboring cell. After reporting the measurement report of the first neighboring cell, the terminal device may start the first timer, and in the validity period of the first timer, determine not to report the measurement report any longer, or report the measurement report corresponding to the second neighboring cell if the detected signal quality of the second neighboring cell is greater than the signal quality of the first neighboring cell. Introducing the first timer can avoid frequent reporting of the measurement report in a time period. In addition, in this application, when detecting the second neighboring cell with good signal quality, the terminal device may report the measurement report in the validity period of the timer. This avoids an omission of a high-quality neighboring cell.

With reference to the first aspect, in some implementations of the first aspect, the measurement configuration information further includes a second threshold, a third threshold, and a first time to trigger corresponding to the at least one neighboring cell, where the second threshold includes a second serving cell signal quality threshold and/or a second detected cell quantity threshold, and the third threshold includes a third serving cell signal quality threshold and/or a third detected cell quantity threshold. The method further includes: determining a second time to trigger based on a value relationship between the detection value and the second threshold and/or the third threshold, where the second threshold is less than or equal to the third threshold, the second time to trigger is obtained based on the first time to trigger, and the detection value includes the signal quality of the serving cell and/or the quantity of detected cells. The second detected cell quantity threshold may also be referred to as a second cell quantity threshold for short, and the third detected cell quantity threshold may also be referred to as a third cell quantity threshold for short.

Based on the radio resource management measurement method provided in this embodiment of this application, the second threshold, the third threshold, and the first time to trigger corresponding to the at least one neighboring cell may be carried in the measurement configuration information. Specifically, the second time to trigger may be determined based on the value relationship between the threshold for the signal quality of the serving cell and/or the quantity of detected cells and the second threshold and/or the third threshold. A feasible manner of adjusting the time to trigger is provided.

With reference to the first aspect, in some implementations of the first aspect, the determining a second time to trigger based on a value relationship between the detection value and the second threshold and/or the third threshold includes: When the detection value is less than the second threshold, determining that the second time to trigger is a time to trigger shorter than the first time to trigger; when the detection value is greater than the third threshold, determining that the second time to trigger is a time to trigger longer than the first time to trigger; or when the detection value is greater than or equal to the second threshold and less than or equal to the third threshold, determining that the second time to trigger is a time to trigger equal to the first time to trigger.

Based on the radio resource management measurement method provided in this embodiment of this application, the second time to trigger may be obtained based on the value relationship between the detection value and the second threshold and/or the third threshold by increasing, decreasing, or retaining the first time to trigger.

With reference to the first aspect, in some implementations of the first aspect, the determining that the second time to trigger is a time to trigger shorter than the first time to trigger includes: determining that the second time to trigger is a product of the first time to trigger and Q, where Q is a positive number less than 1; the determining that the second time to trigger is a time to trigger longer than the first time to trigger includes: determining that the second time to trigger is a product of the first time to trigger and P, where P is a positive number greater than 1; and the determining that the second time to trigger is a time to trigger equal to the first time to trigger includes: determining that the second time to trigger is a product of the first time to trigger and K, where K is equal to 1.

In a possible implementation, obtaining the second time to trigger by increasing, decreasing, or retaining the first time to trigger may be implemented by multiplying the first time to trigger by a coefficient, or adding a parameter to the first time to trigger.

With reference to the first aspect, in some implementations of the first aspect, the second threshold and/or the third threshold are/is at the height granularity. The method further includes: determining, by the terminal device, the second threshold and/or the third threshold based on the height of the terminal device.

The second threshold and/or the third threshold may be height-related values or a height-related value. After receiving the measurement configuration information, the terminal device can determine an appropriate second threshold and/or third threshold based on the height of the terminal device.

With reference to the first aspect, in some implementations of the first aspect, P and/or Q are/is at the height granularity.

P and/or Q may be height-related values or a height-related value.

According to a second aspect, a radio resource management measurement method is provided. The radio resource management measurement method may be performed by a network device or a chip or a circuit disposed in the network device. This is not limited in this application. For ease of description, an example in which the radio resource management measurement method is performed by the network device may be used for description.

The radio resource management measurement method includes:
determining, by the network device, measurement configuration information, where the measurement configuration information includes a first threshold, and the first threshold includes a first serving cell signal quality threshold and/or a first detected cell quantity threshold first detected cell quantity threshold; and sending, by the network device, the measurement configuration information to a terminal device, where the first threshold and a detection value are used by the terminal device to determine whether to report a measurement report.

According to the radio resource management measurement method provided in this embodiment of this application, the first serving cell signal quality threshold and/or the first detected cell quantity threshold are/is carried the measurement configuration information, and the terminal device determines, based on a value relationship between the detection value and the first threshold, and signal quality of at least one neighboring cell, whether to report the measurement report. In this embodiment of this application, the terminal device determines, based on signal quality of a neighboring cell and a value relationship between the signal quality of the serving cell and the first serving cell signal quality threshold and/or a value relationship between the quantity of cells that can be detected and the first detected cell quantity threshold, whether to report the measurement report. This can prevent the terminal device from reporting the measurement report frequently, and avoid a case in which the terminal device does not report the measurement report in a timely manner, so that a measurement mechanism is more appropriate.

With reference to the second aspect, in some implementations of the second aspect, the first threshold includes the first serving cell signal quality threshold. The method further includes: receiving the measurement report from the terminal device, where the signal quality of the serving cell is less than or equal to the first serving cell signal quality threshold, and the signal quality of the at least one neighboring cell meets a measurement report triggering condition; or receiving the measurement report from the terminal device, where the signal quality of the serving cell is greater than or equal to the first serving cell signal quality threshold, signal quality of N neighboring cells all meets a corresponding measurement report triggering condition, and N is a neighboring cell quantity threshold that is carried in the configuration information.

In a possible implementation, the first threshold may be the first serving cell signal quality threshold, and the terminal device may determine, based on the value relationship between the signal quality of the serving cell and the first serving cell signal quality threshold, and whether the at least one neighboring cell meets the measurement report triggering condition in a TTT, whether to report the measurement report. When the signal quality of the serving cell is good, the terminal device may report the measurement report when all the N neighboring cells meet the corresponding measurement report triggering condition. When the signal quality of the serving cell is poor, the terminal device may report the measurement report when the at least one neighboring cell meets the corresponding measurement report triggering condition, where N is understood as the neighboring cell quantity threshold that is carried in the measurement configuration information, and N is a positive integer. Therefore, this avoids frequent reporting of the measurement report when the signal quality of the serving cell is good, and avoids a radio link failure or too late handover caused because the measurement report is not reported in a timely manner when the signal quality of the serving cell is poor.

With reference to the second aspect, in some implementations of the second aspect, the first threshold includes the first detected cell quantity threshold. The method further includes: receiving the measurement report from the terminal device, where the quantity of cells detected by the terminal device is less than or equal to the first detected cell quantity threshold, and the signal quality of the at least one neighboring cell meets a measurement report triggering condition; or receiving the measurement report from the terminal device, where the quantity of cells detected by the terminal device is greater than or equal to the first detected cell quantity threshold, signal quality of N neighboring cells all meets a corresponding measurement report triggering condition, and N is a neighboring cell quantity threshold that is carried in the configuration information.

In another possible implementation, the first threshold may be the first detected cell quantity threshold, and the terminal device may determine, based on the value relationship between the quantity of detected cells and the first detected cell quantity threshold, and whether the at least one neighboring cell meets the measurement report triggering condition in the corresponding TTT, whether to report the measurement report. When there are a large quantity of detected cells, the terminal device may report the measurement report when all the N neighboring cells meet the corresponding measurement report triggering condition. When there are a small quantity of detected cells, the terminal device may report the measurement report when the at least one neighboring cell meets the corresponding measurement report triggering condition. Therefore, this avoids frequent reporting of the measurement report when there are the large quantity of detected cells, and avoids a radio link failure or too late handover caused because the measurement report is not reported in a timely manner when there are the small quantity of detected cells.

In still another possible implementation, the first threshold may include both the first detected cell quantity threshold and the first serving cell signal quality threshold, and the terminal device may determine, based on the value relationship between the signal quality of the serving cell and the first serving cell signal quality threshold, the value relationship between the quantity of detected cells and the first detected cell quantity threshold, and whether the at least one neighboring cell meets a measurement report triggering condition in a corresponding TTT, whether to report the measurement report. That is, the foregoing two implementations may be combined, and details are not described herein again.

With reference to the second aspect, in some implementations of the second aspect, the first threshold is at a height granularity.

The first threshold may be a height-related value.

With reference to the second aspect, in some implementations of the second aspect, the measurement configuration information includes a height threshold.

Based on the radio resource management measurement method provided in this embodiment of this application, the height threshold may be carried in the measurement configuration information, and the measurement configuration information is sent to the terminal device.

With reference to the second aspect, in some implementations of the second aspect, the measurement configuration information further includes a second threshold, a third threshold, and a first time to trigger corresponding to the at least one neighboring cell, where the second threshold includes a second serving cell signal quality threshold and/or a second detected cell quantity threshold, the third threshold includes a third serving cell signal quality threshold and/or a third detected cell quantity threshold, the second threshold and/or the third threshold are/is used by the terminal device to determine a second time to trigger, the second threshold is less than or equal to the third threshold, and the second time to trigger is obtained based on the first time to trigger.

Based on the radio resource management measurement method provided in this embodiment of this application, the second threshold, the third threshold, and the first time to trigger corresponding to the at least one neighboring cell may be carried in the measurement configuration information. Specifically, the second time to trigger may be determined based on a value relationship between the serving cell signal quality threshold and/or the quantity of detected cells and the second threshold and/or the third threshold. A feasible manner of adjusting the time to trigger is provided.

With reference to the second aspect, in some implementations of the second aspect, that the second threshold and/or the third threshold are/is used by the terminal device to determine a second time to trigger includes: When the detection value is less than the second threshold, the second time to trigger is a time to trigger shorter than the first time to trigger; when the detection value is greater than the third threshold, the second time to trigger is a time to trigger longer than the first time to trigger; or when the detection value is greater than or equal to the second threshold and less than or equal to the third threshold, the second time to trigger is a time to trigger equal to the first time to trigger, where the detection value includes the signal quality of the serving cell and/or the quantity of detected cells.

Based on the radio resource management measurement method provided in this embodiment of this application, the second time to trigger may be obtained based on the value relationship between the detection value and the second threshold and/or the third threshold by increasing, decreasing, or retaining the first time to trigger.

With reference to the second aspect, in some implementations of the second aspect, that the second time to trigger is a time to trigger shorter than the first time to trigger includes: The second time to trigger is a product of the first time to trigger and Q, where Q is a positive number less than 1. That the second time to trigger is a time to trigger longer than the first time to trigger includes: The second time to trigger is a product of the first time to trigger and P, where P is a positive number greater than 1. That the second time to trigger is a time to trigger equal to the first time to trigger includes: The second time to trigger is a product of the first time to trigger and K, where K is equal to 1.

In a possible implementation, obtaining the second time to trigger by increasing, decreasing, or retaining the first time to trigger may be obtaining the second time to trigger by multiplying the first time to trigger by a coefficient.

With reference to the second aspect, in some implementations of the second aspect, P and/or Q are/is at the height granularity.

P and/or Q may be height-related values or a height-related value.

With reference to the second aspect, in some implementations of the second aspect, the second threshold and the third threshold are at the height granularity.

The second threshold and the third threshold may be height-related values.

According to a third aspect, a radio resource management measurement method is provided. The radio resource management measurement method may be performed by a terminal device or a chip or a circuit disposed in the terminal device. This is not limited in this application. For ease of description, an example in which the radio resource management measurement method is performed by the terminal device may be used for description.

The radio resource management measurement method includes:
receiving, by the terminal device, measurement configuration information from a network device, where the measurement configuration information includes a second threshold, a third threshold, and a first time to trigger corresponding to at least one neighboring cell, the second threshold includes a second serving cell signal quality threshold and/or a second detected cell quantity threshold, and the third threshold includes a third serving cell signal quality threshold and/or a third detected cell quantity threshold; and determining a second time to trigger based on a value relationship between a detection value and the second threshold and/or the third threshold, where the second threshold is less than or equal to the third threshold, the second time to trigger is obtained based on the first time to trigger, and the detection value includes the signal quality of the serving cell and/or the quantity of detected cells.

Based on the radio resource management measurement method provided in this embodiment of this application, the second threshold, the third threshold, and the first time to trigger corresponding to the at least one neighboring cell may be carried in the measurement configuration information. Specifically, the second time to trigger may be determined based on the value relationship between the serving cell signal quality threshold and/or the quantity of detected cells and the second threshold and/or the third threshold. A feasible manner of adjusting the time to trigger is provided.

With reference to the third aspect, in some implementations of the third aspect, the determining a second time to trigger based on a value relationship between a detection value and the second threshold and/or the third threshold includes: When the detection value is less than the second threshold, determining that the second time to trigger is a time to trigger shorter than the first time to trigger; when the detection value is greater than the third threshold, determining that the second time to trigger is a time to trigger longer than the first time to trigger; or when the detection value is greater than or equal to the second threshold and less than or equal to the third threshold, determining that the second time to trigger is a time to trigger equal to the first time to trigger.

Based on the radio resource management measurement method provided in this embodiment of this application, the second time to trigger may be obtained based on the value relationship between the detection value and the second threshold and/or the third threshold by increasing, decreasing, or retaining the first time to trigger.

With reference to the third aspect, in some implementations of the third aspect, the determining that the second time to trigger is a time to trigger shorter than the first time to trigger includes: determining that the second time to trigger is a product of the first time to trigger and Q, where Q is a positive number less than 1; the determining that the second time to trigger is a time to trigger longer than the first time to trigger includes: determining that the second time to trigger is a product of the first time to trigger and P, where P is a positive number greater than 1; and the determining that the second time to trigger is a time to trigger equal to the first time to trigger includes: determining that the second time to trigger is a product of the first time to trigger and K, where K is equal to 1.

In a possible implementation, obtaining the second time to trigger by increasing, decreasing, or retaining the first time to trigger may be implemented by multiplying the first time to trigger by a coefficient.

With reference to the third aspect, in some implementations of the third aspect, P and/or Q are/is at a height granularity.

P and/or Q may be height-related values or a height-related value.

With reference to the third aspect, in some implementations of the third aspect, the second threshold and/or the third threshold are/is at the height granularity. The method further includes: determining, by the terminal device, the second threshold and/or the third threshold based on a height of the terminal device.

The second threshold and/or the third threshold may be height-related values or a height-related value. After receiving the measurement configuration information, the terminal device can determine an appropriate second threshold and/or third threshold based on the height of the terminal device.

According to a fourth aspect, a radio resource management measurement method is provided. The radio resource management measurement method may be performed by a network device or a chip or a circuit disposed in the network device. This is not limited in this application. For ease of description, an example in which the radio resource management measurement method is performed by the network device may be used for description.

The radio resource management measurement method includes:
determining, by the network device, measurement configuration information, where the measurement configuration information includes a second threshold, a third threshold, and a first time to trigger corresponding to at least one neighboring cell, the second threshold includes a second serving cell signal quality threshold and/or a second detected cell quantity threshold, the third threshold includes a third serving cell signal quality threshold and/or a third detected cell quantity threshold, a value relationship between a detection value and the second threshold and/or the third threshold is used to determine a second time to trigger, the second threshold is less than or equal to the third threshold, the second time to trigger is obtained based on the first time to trigger, and the detection value includes the signal quality of the serving cell and/or the quantity of detected cells.

Based on the radio resource management measurement method provided in this embodiment of this application, the second threshold, the third threshold, and the first time to trigger corresponding to the at least one neighboring cell may be carried in the measurement configuration information. Specifically, the second time to trigger may be determined based on the value relationship between the serving cell signal quality threshold and/or the quantity of detected cells and the second threshold and/or the third threshold. A feasible manner of adjusting the time to trigger is provided.

With reference to the fourth aspect, in some implementations of the fourth aspect, that a value relationship between a detection value and the second threshold and/or the third threshold is used to determine a second time to trigger includes: When the detection value is less than the second threshold, the second time to trigger is a time to trigger shorter than the first time to trigger; when the detection value is greater than the third threshold, the second time to trigger is a time to trigger longer than the first time to trigger; or when the detection value is greater than or equal to the second threshold and less than or equal to the third threshold, the second time to trigger is a time to trigger equal to the first time to trigger.

Based on the radio resource management measurement method provided in this embodiment of this application, the second time to trigger may be obtained based on the value relationship between the detection value and the second threshold and/or the third threshold by increasing, decreasing, or retaining the first time to trigger.

With reference to the fourth aspect, in some implementations of the fourth aspect, that the second time to trigger is a time to trigger shorter than the first time to trigger includes: The second time to trigger is a product of the first time to trigger and Q, where Q is a positive number less than 1. That the second time to trigger is a time to trigger longer than the first time to trigger includes: The second time to trigger is a product of the first time to trigger and P, where P is a positive number greater than 1. That the second time to trigger is a time to trigger equal to the first time to trigger includes: The second time to trigger is a product of the first time to trigger and K, where K is equal to 1.

In a possible implementation, obtaining the second time to trigger by increasing, decreasing, or retaining the first time to trigger may be implemented by multiplying the first time to trigger by a coefficient.

With reference to the fourth aspect, in some implementations of the fourth aspect, P and/or Q are/is at a height granularity.

P and/or Q may be height-related values or a height-related value.

With reference to the fourth aspect, in some implementations of the fourth aspect, the second threshold and the third threshold are at the height granularity.

The second threshold and the third threshold may be height-related values.

According to a fifth aspect, a radio resource management measurement apparatus is provided. The radio resource management measurement apparatus includes a processor, configured to implement a function of the terminal device in the methods described in the first aspect and the third aspect.

Optionally, the radio resource management measurement apparatus may further include a memory, the memory is coupled to the processor, and the processor is configured to implement the function of the terminal device in the methods described in the first aspect and the third aspect.

In a possible implementation, the memory is configured to store program instructions and data. The memory is coupled to the processor, and the processor may invoke and execute the program instructions stored in the memory, to implement the function of the terminal device in the methods described in the first aspect and the third aspect.

Optionally, the radio resource management measurement apparatus may further include a communication interface, and the communication interface is used by the radio resource management measurement apparatus to communicate with another device. When the radio resource management measurement apparatus is a terminal device, a transceiver may be the communication interface or an input/output interface.

In a possible design, the radio resource management measurement apparatus includes the processor and the communication interface, configured to implement the function of the terminal device in the methods described in the first aspect and the third aspect.

Specifically, the processor communicates with an external device through the communication interface.

The processor is configured to run a computer program, to enable the apparatus to implement any method described in the first aspect and the third aspect.

It may be understood that an external device may be an object other than the processor, or an object other than the apparatus.

In another implementation, when the radio resource management measurement apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a sixth aspect, a radio resource management measurement apparatus is provided. The radio resource management measurement apparatus includes a processor, configured to implement a function of the network device in the methods described in the second aspect and the fourth aspect.

Optionally, the radio resource management measurement apparatus may further include a memory, the memory is coupled to the processor, and the processor is configured to implement the function of the network device in the methods described in the second aspect and the fourth aspect.

In a possible implementation, the memory is configured to store program instructions and data. The memory is coupled to the processor, and the processor may invoke and execute the program instructions stored in the memory, to implement the function of the network device in the methods described in the second aspect and the fourth aspect. Optionally, the radio resource management measurement apparatus may further include a communication interface, and the communication interface is used by the radio resource management measurement apparatus to communicate with another device. When the radio resource management measurement apparatus is the network device, the communication interface is a transceiver, an input/output interface, a circuit, or the like.

In a possible design, the radio resource management measurement apparatus includes the processor and the communication interface, configured to implement the function of the network device in the methods described in the second aspect and the fourth aspect.

Specifically, the processor communicates with an external device through the communication interface.

The processor is configured to run a computer program, to enable the apparatus to implement any method described in the second aspect and the fourth aspect.

It may be understood that an external device may be an object other than the processor, or an object other than the apparatus.

In another possible design, the radio resource management measurement apparatus is a chip or a chip system. The communication interface may be an input/output interface, an interface circuit, an output circuit, an input circuit, a pin, a related circuit, or the like on the chip or the chip system. The processor may alternatively be embodied as a processing circuit or a logic circuit.

According to a seventh aspect, a computer-readable storage medium is provided. The computer-readable storage medium stores a computer program. When the computer program is executed by a communication apparatus, the communication apparatus is enabled to implement the method according to any one of the first aspect and the third aspect and the possible implementations of the first aspect and the third aspect.

According to an eighth aspect, a computer-readable storage medium is provided. The computer-readable storage medium stores a computer program. When the computer program is executed by a communication apparatus, the communication apparatus is enabled to implement the method according to any one of the second aspect and the fourth aspect and the possible implementations of the second aspect and the fourth aspect.

According to a ninth aspect, a computer program product including instructions is provided. When the instructions are executed by a computer, a communication apparatus is enabled to implement the method according to any one of the first aspect and the third aspect and the possible implementations of the first aspect and the third aspect

According to a tenth aspect, a computer program product including instructions is provided. When the instructions are executed by a computer, a communication apparatus is enabled to implement the method according to any one of the second aspect and the fourth aspect and the possible implementations of the second aspect and the fourth aspect.

According to an eleventh aspect, a communication system is provided. The communication system includes the radio resource management measurement apparatus according to the fifth aspect and the radio resource management measurement apparatus according to the sixth aspect.

### BRIEF DESCRIPTION OF DRAWINGS

FIG. 1 is a schematic diagram of a system 100 applicable to a radio resource management measurement method according to an embodiment of this application;
FIG. 2 is a schematic flowchart of a radio resource management measurement method according to an embodiment of this application;
FIG. 3 is a schematic flowchart of a TTT adjustment method according to an embodiment of this application;
FIG. 4 is a schematic diagram of a radio resource management measurement apparatus 400 according to this application;
FIG. 5 is a schematic diagram of a structure of a terminal device 500 applicable to an embodiment of this application;
FIG. 6 is a schematic diagram of a radio resource management measurement apparatus 600 according to this application; and
FIG. 7 is a schematic diagram of a structure of a network device 700 applicable to an embodiment of this application.

### DESCRIPTION OF EMBODIMENTS

The following describes technical solutions in this application with reference to the accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR) system, or a future network. The technical solutions provided in this application may further be applied to a future communication system, for example, a 6th generation mobile communication system. Alternatively, the communication system may be a public land mobile network (public land mobile network, PLMN), a device-to-device (device-to-device, D2D) communication system, a machine-to-machine (machine-to-machine, M2M) communication system, an internet of things (internet of things, IoT) communication system, or another communication system.

A terminal device (terminal equipment) in embodiments of this application may be an uncrewed aerial vehicle (unmanned aerial vehicle, UAV), an access terminal, a subscriber unit, a subscriber station, a mobile station, a relay station, a remote station, a remote terminal, a mobile device, a user terminal (user terminal), user equipment (user equipment, UE), a terminal (terminal), a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile network (public land mobile network, PLMN), a terminal device in a future internet of vehicles, or the like. This is not limited in embodiments of this application.

By way of example and not limitation, in embodiments of this application, the wearable device may also be referred to as a wearable intelligent device, and is a generic term for wearable devices such as glasses, gloves, watches, clothes, and shoes that are developed based on intelligent design of daily wearing by using wearable technologies. The wearable device is a portable device that is directly worn on a body or integrated into clothes or an accessory of a user. The wearable device is not merely a hardware device, but is used to implement a powerful function through software support, data exchange, and cloud interaction. Generalized wearable intelligent devices include fullfeatured and large-size devices, such as smart watches or smart glasses, that can implement complete or partial functions without depending on smartphones, and devices, such as various smart bands, or smart jewelry for monitoring physical signs, that focus on only one type of application functions and need to work with other devices such as smartphones.

In addition, the terminal device in embodiments of this application may alternatively be a terminal device in an IoT system. IoT is an important part of future development of information technologies. A main technical feature of the IoT is connecting a thing to a network by using a communication technology, to implement an intelligent network for interconnection between persons and machines, and between things. In embodiments of this application, an IoT technology may implement massive connections, deep coverage, and terminal power saving by using, for example, a narrowband (narrowband, NB) technology.

In addition, in embodiments of this application, the terminal device may further include a sensor such as an intelligent printer, a train detector, or a gas station. Main functions of the terminal device include collecting data (for some terminal devices), receiving control information and downlink data from a network device, sending an electromagnetic wave, and sending uplink data to the network device.

The network device in embodiments of this application may be any communication device that has a wireless transceiver function and that is configured to communicate with the terminal device. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB, HeNB or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the device may be a gNB or a transmission point (TRP or TP) in a 5G system such as an NR system; may be an antenna panel or a group of antenna panels (including a plurality of antenna panels) of a base station in a 5G system; or may be a network node, such as a baseband unit (BBU) or a distributed unit (distributed unit, DU), that constitutes a gNB or a transmission point.

In some deployments, the network device in embodiments of this application may be a centralized unit (central unit, CU), a distributed unit (distributed unit, DU), or the like. The network device includes the CU and the DU. The gNB may further include an active antenna unit (active antenna unit, AAU). The CU implements some functions of the gNB, and the DU implements some functions of the gNB. For example, the CU is responsible for processing a non-real-time protocol and a service, to implement functions of a radio resource control (radio resource control, RRC) layer and a packet data convergence protocol (packet data convergence protocol, PDCP) layer. The DU is responsible for processing a physical layer protocol and a real-time service, to implement functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

Further, the CU may be divided into a control plane central unit (CU-CP) and a user plane central unit (CU-UP). The CU-CP and the CU-UP may also be deployed on different physical devices. The CU-CP is responsible for a control plane function, and mainly includes the RRC layer and a PDCP-C layer. The PDCP-C layer is mainly responsible for data encryption and decryption, integrity protection, data transmission, and the like on a control plane. The CU-UP is responsible for a user plane function, and mainly includes an SDAP layer and a PDCP-U layer. The SDAP layer is mainly responsible for processing data of a core network and mapping a flow (flow) to a bearer. The PDCP-U layer is mainly responsible for at least one function of encryption and decryption, integrity protection, header compression, serial number maintenance, data transmission, and the like on a data plane. Specifically, the CU-CP and the CU-UP are connected through a communication interface (for example, an E1 interface). The CU-CP represents a network device and is connected to a core network device through a communication interface (for example, an NG interface), and is connected to the DU through a communication interface (for example, an F1-C (control plane) interface). The CU-UP is connected to the DU through a communication interface (for example, an F1-U (user plane) interface).

In another possible implementation, the PDCP-C layer is also included in the CU-UP.

It may be understood that the foregoing protocol layer division between the CU and the DU, and protocol layer division between the CU-CP and the CU-UP are merely examples, and there may be another division manner. This is not limited in embodiments of this application.

The network device mentioned in embodiments of this application may be a device including a CU or a DU, a device including a CU and a DU, or a device including a control plane CU node (a CU-CP node), a user plane CU node (a CU-UP node), and a DU node.

The network device and the terminal device may be deployed on land, including indoor or outdoor devices, handheld devices, or vehicle-mounted devices; may be deployed on the water; or may be deployed on an airplane, a balloon, or a satellite in the air. Scenarios in which the network device and the terminal device are located are not limited in embodiment of this application.

In embodiments of this application, the terminal device or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software.

In addition, aspects or features of this application may be implemented as a method, an apparatus or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk, or a magnetic tape), an optical disc (for example, a compact disc (compact disc, CD), a digital versatile disc (digital versatile disc, DVD)), a smart card and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable storage media" may include but is not limited to a radio channel, and various other media that can store, include, and/or carry instructions and/or data.

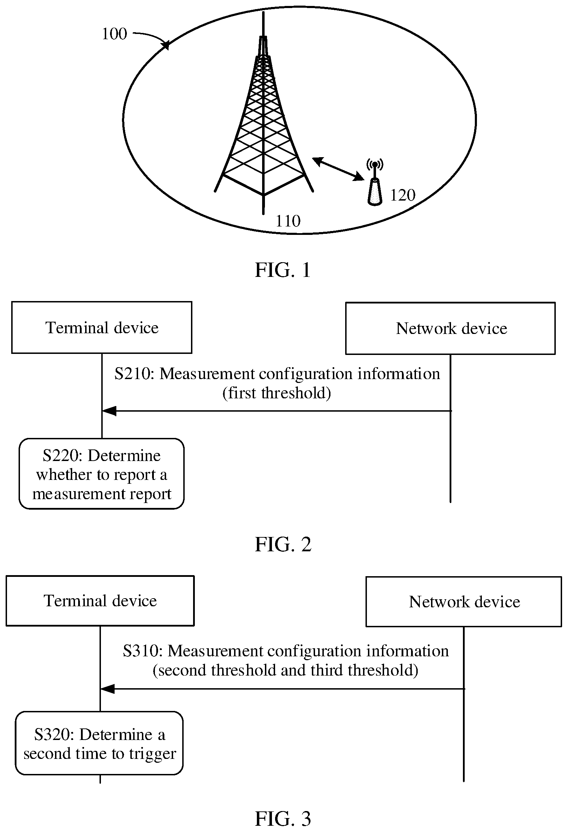

For ease of understanding embodiments of this application, a communication system shown in FIG. 1 is first used as an example to describe in detail a communication system applicable to embodiments of this application. FIG. 1 is a schematic diagram of a communication system 100 applicable to a radio resource management measurement method according to an embodiment of this application. As shown in FIG. 1, the communication system 100 may include at least one network device, for example, a network device 110 shown in FIG. 1. The communication system 100 may further include at least one terminal device, for example, a terminal device 120 shown in FIG. 1. The network device 110 may communicate with the terminal device 120 through a radio link. At least one antenna may be configured for each communication device such as the network device 110 or the terminal device 120. For each communication device in the communication system 100, the configured at least one antenna may include at least one transmit antenna configured to send a signal and at least one receive antenna configured to receive a signal. In a possible manner, the communication devices in the communication system 100, for example, the network device 110 and the terminal device 120, may communicate with each other by using a multi-antenna technology.

It should be understood that FIG. 1 is only a simplified schematic diagram of an example for ease of understanding. The communication system 100 may further include another network device or another terminal device, which is not shown in FIG. 1.

For ease of understanding embodiments of this application, several basic concepts in embodiments of this application are briefly described. It should be understood that basic concepts described below are briefly described by using a basic concept specified in an NR protocol as an example, but embodiments of this application are not limited to being applied to an NR system. Therefore, standard names appearing when the NR system is used as an example for description are all function descriptions. Specific names are not limited, indicate only functions of a device, and may be correspondingly extended to another system, for example, a 2G, 3G, 4G, or future communication system.

### 1. Typical RRM measurement

In the typical RRM measurement, a serving base station sends an RRC message including measurement configuration information to a terminal device. For example, the RRC message may be an RRC connection reconfiguration message or an RRC reconfiguration message. This is not limited in this embodiment. The measurement configuration information may include a measurement identifier (for example, measID), a measurement object (for example, measObject), and a reporting configuration (for example, ReportConfig). The measurement identifier may associate the measurement object and the reporting configuration, that is, a measurement object and a reporting configuration that are associated with a measurement identifier may be obtained by using the measurement identifier. The measurement object may be a frequency or a frequency band. The reporting configuration is used to configure an event type of a reported event (or an event type of a measurement report triggering condition) and a parameter, for example, a reporting condition threshold, a time to trigger (for example, time to trigger, TTT), and a hysteresis (for example, hysteresis), that corresponds to the event type of the reported event (or the event type of the measurement report triggering condition).

For example, the reporting configuration may mainly include a reporting type (for example, the reporting type is periodic reporting or event-triggered reporting), an event triggering configuration (corresponding configuration information obtained when the reporting type is the event-triggered reporting), and a periodic reporting configuration (corresponding configuration information obtained when the reporting type is the periodic reporting) of an RRM measurement report. The event triggering configuration may include the event type of the reported event, a related configuration corresponding to the event, a reference signal class, a reporting interval, a quantity of reporting times, and the like. The periodic reporting configuration may include the reference signal class, the reporting interval, the quantity of reporting times, a maximum quantity of reported cells, and the like.

As an example, the event type may be at least one of A1 to A6. As an example, the related configuration corresponding to the event may include a threshold (for example, a reporting condition threshold corresponding to the reported event), a hysteresis, and a TTT.

For ease of understanding, a specific example is used to describe the typical RRM measurement.

The event A3 is used as an example. An event type of a reported event configured in a reporting configuration is the event A3, and a corresponding threshold is a preset reporting condition threshold (for example, an offset dB). When cell signal quality of a neighboring cell associated with the event A3 is greater than cell signal quality of a serving cell and a difference therebetween is greater than the preset reporting condition threshold, the neighboring cell meets an event A3 triggering condition (or meets a measurement report triggering condition). The signal quality includes reference signal received power (reference signal received power, RSRP), reference signal received quality (reference signal received quality, RSRQ), and/or a signal to interference plus noise ratio (Signal to Interference plus Noise Ratio, SINR). In other words, when the cell signal quality of the neighboring cell is greater than the cell signal quality of the serving cell and the difference therebetween is greater than the preset reporting condition threshold, the terminal device may send a measurement report (for example, the measurement report may include an identifier of the neighboring cell and a measurement result) to the serving base station. If measurement configuration information includes a TTT, when the neighboring cell always meets the event A3 triggering condition in the configured TTT, the terminal device may send the measurement report to the serving base station.

It may be understood that the typical RRM measurement may also be referred to as conventional RRM measurement.

### 2. Enhanced RRM measurement

A mobile communication system is initially designed mainly for a ground terminal device. In some special scenarios, for example, when a height of a terminal device is higher than that of a base station, interference increases and frequent handover occurs. For example, the terminal device is an uncrewed aerial vehicle (unmanned aerial vehicle, UAV). When a flight height of the uncrewed aerial vehicle is higher than that of the base station, the following problems may occur when the uncrewed aerial vehicle accesses a network for communication:
Problem 1: Because a base station signal mainly radiates towards a ground, although some signals are diffused to the air due to ground signal reflection or scattering, or some side lobes of a base station antenna radiate to the air, strength of a signal received by the uncrewed aerial vehicle is generally low.
Problem 2: When the uncrewed aerial vehicle is flying at a high height, because there are fewer obstacles, a signal sent by the uncrewed aerial vehicle can be received by more base stations, and the uncrewed aerial vehicle can receive signals from more base stations. Consequently, interference increases in both an uplink direction and a downlink direction. In typical RRM measurement, when the uncrewed aerial vehicle is at a specific height, if the uncrewed aerial vehicle can receive signals from a plurality of base stations, more measurement reports may be triggered more frequently. Consequently, interference is caused, and power consumption of the uncrewed aerial vehicle is high. To reduce the interference and the energy consumption, a typical RRM measurement mechanism in an uncrewed aerial vehicle scenario is enhanced (the measurement is referred to as the enhanced RRM measurement).

When there are N neighboring cells, and the N neighboring cells all meet a corresponding measurement event triggering condition in a corresponding TTT, the uncrewed aerial vehicle may send a measurement report to a serving base station. A threshold N for a quantity of neighboring cells is included in measurement configuration information sent by the serving base station to the uncrewed aerial vehicle, where N is an integer greater than or equal to 1.

In an enhanced RRM measurement mechanism, when the uncrewed aerial vehicle is located in an edge area of a serving cell, link quality of the serving cell is poor. In this case, if the uncrewed aerial vehicle does not detect, through measurement, that the N neighboring cells all meet the corresponding measurement event triggering condition, the uncrewed aerial vehicle cannot send the measurement report to the serving base station. Consequently, a network side does not trigger the uncrewed aerial vehicle to perform a handover procedure, and a radio link failure (radio link failure, RLF) occurs, or too late handover may occur in this scenario. As a result, communication system performance is affected. In the radio resource management measurement method provided in this application, in a scenario in which the uncrewed aerial vehicle is located in the edge area of the serving cell, the uncrewed aerial vehicle can report the measurement report in a timely manner, to avoid the RLF or a handover failure. However, the radio resource management measurement method provided in embodiments of this application is not limited to being applied to the scenario in which the uncrewed aerial vehicle is located in the edge area of the serving cell.

In addition, to facilitate understanding of embodiments of this application, the following several descriptions are provided.

First, in this application, "being used to indicate" may include "being used to directly indicate" and "being used to indirectly indicate". When a piece of indication information is used to indicate A, the indication information may directly indicate A or indirectly indicate A, but it does not necessarily indicate that the indication information includes A.

Information indicated by the indication information is referred to as to-be-indicated information. In a specific implementation process, there are a plurality of manners of indicating the to-be-indicated information. For example, but not limited to, the to-be-indicated information may be directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, a common part of all pieces of information may be further identified and indicated in a unified manner, to reduce indication overheads caused by separately indicating same information.

Second, "first", "second", and various numerical numbers (for example, "#1" and "#2") in this application are merely used to distinguish between objects for ease of description, but are not intended to limit the scope of embodiments of this application, for example, distinguish between different thresholds and different neighboring cells.

Third, in this application, "preset" may include being indicated by a network device by using signaling or being predefined, for example, defined in a protocol. "Predefinition" may be implemented by prestoring corresponding code or a corresponding table in a device (for example, including a terminal device and a network device), or in another manner that may be used to indicate related information. A specific implementation is not limited in this application.

Fourth, "storage" in embodiments of this application may be storage in one or more memories. The one or more memories may be separately disposed, or may be integrated into an encoder, a translator, a processor, or a communication apparatus. Alternatively, a part of the one or more memories may be separately disposed, and a part of the one or more memories are integrated into a translator, a processor, or a communication apparatus. A type of the memory may be a storage medium in any form, and this is not limited in this application.

Fifth, a "protocol" in embodiments of this application may be a standard protocol in the communication field, for example, may include an LTE protocol, an NR protocol, and a related protocol used in a future communication system. This is not limited in this application.

With reference to FIG. 1, the foregoing briefly describes the scenario to which the radio resource management measurement method provided in embodiments of this application can be applied, and describes the basic concepts that may be used in embodiments of this application. The following describes in detail the radio resource management measurement method provided in embodiments of this application with reference to the accompanying drawings.

It should be understood that the radio resource management measurement method provided in embodiments of this application may be applied to, for example, the communication system 100 shown in FIG. 1. The communication system may include at least one network device and at least one terminal device.

It should be further understood that, a specific structure of an execution body of the method provided in embodiments of this application is not particularly limited in the following embodiments, provided that a program that records code of the method provided in embodiments of this application can be run to perform communication according to the method provided in embodiments of this application. For example, the execution body of the method provided in embodiments of this application may be a terminal device, a network device, or a function module that is in the terminal device or the network device and that can invoke and execute the program.

Without loss of generality, interaction between the network device and the terminal device is used as an example below to describe in detail the radio resource management measurement method provided in embodiments of this application.

FIG. 2 is a schematic flowchart of a radio resource management measurement method according to an embodiment of this application. Execution bodies in the flowchart include a terminal device and a network device. In a possible implementation, the terminal device may be, for example, an uncrewed aerial vehicle.

The radio resource management measurement method includes at least some of the following steps.

S210: The network device sends measurement configuration information to the terminal device.

The measurement configuration information includes a first threshold. The first threshold includes a first serving cell signal quality threshold and/or a first detected cell quantity threshold. The first threshold is used by the terminal device to determine whether to report a measurement report.

It should be understood that, in this embodiment of this application, how the network device sends the measurement configuration information to the terminal device is not limited. The network device may send an RRC reconfiguration message to the terminal device, where the RRC reconfiguration message includes the measurement configuration information. Alternatively, the network device may send another piece of signaling to the terminal device, where the signaling carries the measurement configuration information.

It should be further understood that the measurement configuration information may include a plurality of pieces of measurement configuration information. The network device may send the plurality of pieces of measurement configuration information to the terminal device at a time, or may separately send the plurality of pieces of measurement configuration information for a plurality of times. This is not limited in this application.

Further, the measurement configuration information may further include measurement configurations corresponding to L neighboring cells, and measurement configurations of different neighboring cells may be the same or different (for example, measurement identifiers, measurement objects, or reporting configurations in the measurement configurations of the different neighboring cells may be the same or different). This is not limited in this application. Optionally, the measurement configuration information includes a threshold N. L is a positive integer, and N is a positive integer less than or equal to L. N may be understood as a neighboring cell quantity threshold that is configured by the network device, and is used by the terminal device to determine whether to report the measurement report.

It should be understood that, in addition to the first threshold, the measurement configuration information in the embodiment shown in FIG. 2 further includes the measurement identifier, the measurement object, the reporting configuration, and the like described above. Except the first threshold, information included in the measurement configuration information in the embodiment shown in FIG. 2 is similar to content included in measurement configuration information specified in a current protocol. Details are not described herein.

In a possible implementation, there are one or more first thresholds sent by the network device to the terminal device. When there are a plurality of first thresholds sent by the network device to the terminal device, the terminal device may randomly select one threshold for use.

In another possible implementation, the first threshold may be at a height granularity or at a height interval granularity. That is, the first threshold and a height of the terminal device meet a first correspondence. Different heights, height intervals, or height levels correspond to different first thresholds. The height of the terminal device may be a height relative to the ground, a height relative to a sea level, or a height relative to a reference point. This is not limited in this application.

Optionally, in this implementation, the network device may send a plurality of first thresholds to the terminal device, and each first threshold corresponds to a height, a height interval, or a height level.

For example, the measurement configuration information includes three first thresholds (for example, a first threshold #1, a first threshold #2, and a first threshold #3). The first threshold #1 corresponds to a height interval #1 (or when the height is less than a height #1, a corresponding threshold is the first threshold #1). In this case, when the height of the terminal device belongs to the height interval #1 (or is less than the height #1), the first threshold #1 is used. The first threshold #2 corresponds to a height interval #2 (or when the height is greater than or equal to the height #1 and less than or equal to a height #2, a corresponding threshold is the first threshold #2). In this case, when the height of the terminal device belongs to the height interval #2 (or the height of the terminal device is greater than or equal to the height #1 and less than or equal to the height #2), the first threshold #2 is used. The first threshold #3 corresponds to a height interval #3 (or when the height is greater than the height #2, a corresponding threshold is the first threshold #3). In this case, when the height of the terminal device belongs to the height interval #3 (or the height of the terminal device is greater than the height #2), the first threshold #3 is used. The height #1 is less than or equal to the height #2. The height #1 and the height #2 may be included in the foregoing measurement configuration information.

Optionally, in this implementation, the network device may send one first threshold to the terminal device. As the height changes by one offset, the first threshold may change by one offset accordingly. The offset of the height and the offset of the first threshold may be specified in a protocol, may be set by the terminal device, or may be indicated by the network device (for example, the network device sends indication information to the terminal device, where the indication information is used to indicate the offset corresponding to the first threshold, and the indication information may be included in the foregoing measurement configuration information). This is not limited in this application.

For example, as the height increases by 10 meters, the first threshold increases by 20 dBm, where the first threshold is the first serving cell signal quality threshold. The measurement configuration information may include one first threshold (for example, a first threshold #1) and a height #1. The first threshold #1 corresponds to a height interval #1 (or when the height is less than the height #1, a corresponding threshold is the first threshold #1). In this case, when the height of the terminal device is less than the height #1, the first threshold #1 is used. When the height of the terminal device is greater than or equal to the height #1 and less than or equal to ((height #1)+10 (meter)), ((first threshold #1)+20) is used, and so on. Details are not described.

For another example, as the height increases by 10 meters, the first threshold increases by 2, where the first threshold is the first detected cell quantity threshold. The measurement configuration information may include one first threshold (for example, a first threshold #1) and a height #1. The first threshold #1 corresponds to a height interval #1 (or when the height is less than the height #1, a corresponding threshold is the first threshold #1). In this case, when the height of the terminal device is less than the height #1, the first threshold #1 is used. When the height of the terminal device is greater than or equal to the height #1 and less than or equal to ((height #1)+10 (meter)), ((first threshold #1)+2) is used, and so on. Details are not described.

In another example, the measurement configuration information may include height interval information. In an example, the measurement configuration information may include information about a height interval #1' and information about a height interval #2'. The height interval #1' is [H1', H2'], and the height interval #2' is [H3', H4']. In addition, the measurement configuration information further includes a first threshold #1' and a first threshold #2'. When the height of the terminal device belongs to the height interval #1', the terminal device uses the first threshold #1'. When the height of the terminal device belongs to the height interval #2', the terminal device uses the first threshold #2'.

It should be understood that using the first threshold described in the embodiment shown in FIG. 2 means that the terminal device determines, based on the first threshold, whether to report the measurement report. For example, the terminal device may compare a detection value with the first threshold, to determine whether to report the measurement report.

Optionally, the measurement configuration information may include at least one height threshold. For example, the measurement configuration information includes the height #1, the height #2, and a height #3. In a possible implementation, the height #1, the height #2, and the height #3 in this application may be measured in meters. However, this is not limited in this application. For example, the height #1, the height #2, and the height #3 may alternatively be measured in other height units such as kilometers, decimeters, and centimeters. Examples are not described herein one by one.

Alternatively, optionally, the measurement configuration information may include height interval information. In an example, the measurement configuration information may include information about a height interval #1 and information about a height interval #2. The height interval #1 is [H1, H2], and the height interval #2 is [H3, H4]. In addition, the measurement configuration information further includes a first threshold #1 and a first threshold #2. When the height of the terminal device belongs to the height interval #1, the terminal device uses the first threshold #1. When the height of the terminal device belongs to the height interval #2, the terminal device uses the first threshold #2.

Further, after receiving the measurement configuration information, the terminal device determines whether to report the measurement report. In other words, the method procedure shown in FIG. 2 further includes S220: The terminal device determines whether to report the measurement report.

Optionally, when the measurement configuration information includes a plurality of height-related first thresholds, or the measurement configuration information includes one first threshold and the first threshold changes as the height changes, after receiving the measurement configuration information, the terminal device may determine, based on the height of the terminal device, an appropriate first threshold.

Alternatively, optionally, when the measurement configuration information includes a plurality of first thresholds (which are not related to the height), after receiving the measurement configuration information, the terminal device may randomly determine one first threshold.

Further, after determining the appropriate first threshold, the terminal device may determine, by using the appropriate first threshold, whether to report the measurement report.

For example, that the terminal device determines, based on the detection value (for example, the detection value may be the signal quality of the serving cell and/or the quantity of detected cells) and the first threshold

(when the detection value is the signal quality of the serving cell, the first threshold is the first serving cell signal quality threshold; when the detection value is the quantity of detected cells, the first threshold is the first detected cell quantity threshold; when the detection value is the signal quality of the serving cell and the quantity of detected cells, the first threshold is the first serving cell signal quality threshold and the first detected cell quantity threshold), whether to report the measurement report includes the following several cases:

### Case 1:

The first threshold includes the first serving cell signal quality threshold, and the detection value includes the signal quality of the serving cell.

Optionally, the signal quality of the serving cell includes cell signal quality of the serving cell, and/or signal quality of a beam that belongs to the serving cell (for example, signal quality of M beams with best signal quality that belong to the serving cell, signal quality of M1 beams with worst signal quality that belong to the serving cell, or signal quality of other beams, where M and M1 are greater than or equal to 1).

Optionally, the first serving cell signal quality threshold may include a first threshold for cell signal quality and/or a first beam signal quality threshold. For example, if the first serving cell signal quality threshold is 10 dBm, the signal quality of the serving cell detected by the terminal device may be compared with 10 dBm. A specific value of the first serving cell signal quality threshold is not limited in this embodiment of this application.

In the case 1, that the terminal device determines, based on a value relationship between the detection value and the first threshold, and signal quality of at least one neighboring cell, whether to report the measurement report includes:
Possibility 1: If the signal quality of the serving cell is less than or equal to the first serving cell signal quality threshold, the terminal device follows the typical RRM measurement mechanism described above. To be specific, when the signal quality of the at least one neighboring cell meets a measurement report triggering condition, the terminal device determines to report the measurement report. In this case, the measurement report includes a measurement result of the at least one neighboring cell that meets the measurement report triggering condition, and the measurement result specifically includes at least one of the following: identification information (for example, a PCI and frequency information) of the at least one neighboring cell, cell signal quality of the at least one neighboring cell, identification information (for example, an SSB index and a CSI-RS index) of a beam that belongs to the at least one neighboring cell, or signal quality of the beam that belongs to the at least one neighboring cell. Specifically, for example, when the cell signal quality of the serving cell is less than or equal to the first threshold for the cell signal quality, and/or when the signal quality of the beam that belongs to the serving cell is less than or equal to the first beam signal quality threshold, the terminal device follows the typical RRM measurement mechanism described above.
Possibility 2: If the signal quality of the serving cell is greater than or equal to the first serving cell signal quality threshold, the terminal device follows the enhanced RRM measurement mechanism described above. To be specific, when signal quality of N neighboring cells all meets a corresponding measurement report triggering condition, the terminal device determines to report the measurement report. In this case, the measurement report includes a measurement result of at least one of the N neighboring cells that meet the corresponding measurement report triggering condition, and the measurement result specifically includes at least one of the following: identification information (for example, a PCI and frequency information) of the at least one neighboring cell, cell signal quality of the at least one neighboring cell, identification information (for example, an SSB index and a CSI-RS index) of a beam that belongs to the at least one of the N neighboring cells, or signal quality of the beam that belongs to the at least one of the N neighboring cells. Specifically, for example, when the cell signal quality of the serving cell is greater than or equal to the first threshold for the cell signal quality, and/or when the signal quality of the beam that belongs to the serving cell is greater than or equal to the first beam signal quality threshold, the terminal device follows the enhanced RRM measurement mechanism described above.

It can be learned from the descriptions of the two implementations shown in the case 1 that, when the signal quality of the serving cell is equal to the first serving cell signal quality threshold, the terminal device may select either the typical RRM measurement mechanism or the enhanced RRM measurement mechanism. This is not limited herein. When different RRM measurement mechanisms are selected, content of reported measurement reports may be different or the same.

In the case 1, a mechanism for reporting the measurement report based on the signal quality of the serving cell is provided, so that the terminal device can appropriately report the measurement report. On the one hand, the terminal device is prevented from reporting the measurement report frequently when the signal quality of the serving cell is good. On the other hand, an RLF or too late handover caused because the measurement report is not reported in a timely manner is avoided when the signal quality of the serving cell is poor.

### Case 2:

The first threshold includes the first detected cell quantity threshold, and the detection value includes the quantity of detected cells.

In the case 2, that the terminal device determines, based on a value relationship between the detection value and the first threshold, and signal quality of at least one neighboring cell, whether to report the measurement report includes:
In a possible implementation, if the quantity of cells detected by the terminal device is less than or equal to the first detected cell quantity threshold, the terminal device follows the typical RRM measurement mechanism described above. To be specific, when the signal quality of the at least one neighboring cell meets a measurement report triggering condition, the terminal device determines to report the measurement report. In this case, for content that may be included in the measurement report, refer to the possibility 1 in the case 1. Details are not described herein again.

In another possible implementation, if the quantity of cells detected by the terminal device is greater than or equal to the first detected cell quantity threshold, the terminal device follows the enhanced RRM measurement mechanism described above. To be specific, when signal quality of N neighboring cells all meets a corresponding measurement report triggering condition, the terminal device determines to report the measurement report. In this case, for content that may be included in the measurement report, refer to the possibility 2 in the case 1. Details are not described herein again.

In a possible implementation, the quantity of cells detected by the terminal device is a quantity of neighboring cells that can be detected by the terminal device when the terminal device is in a service area of the serving cell. For example, if signal quality of a neighboring cell is good, even if the terminal device is located in the coverage area of the serving cell, the terminal device can still detect a signal of the neighboring cell.

In another possible implementation, the quantity of cells detected by the terminal device is a total quantity of serving cells and neighboring cells that can be detected by the terminal device when the terminal device is in a service area of the serving cell.

It can be learned from the descriptions in the two implementations shown in the case 2 that, when the quantity of detected cells is equal to the first detected cell quantity threshold, the terminal device may select either the typical RRM measurement mechanism or the enhanced RRM measurement mechanism. This is not limited herein. Specifically, after the terminal device selects different RRM measurement mechanisms, content of measurement reports reported by the terminal device may be different or the same.

In the case 2, a mechanism for reporting the measurement report based on the quantity of cells detected by the terminal device is provided, so that the terminal device can appropriately report the measurement report. On the one hand, the terminal device is prevented from reporting the measurement report frequently when the quantity of cells that can be detected by the terminal device is large. On the other hand, an RLF or too late handover caused because the measurement report is not reported in a timely manner is avoided when the quantity of cells that can be detected by the terminal device is small.

### Case 3:

The first threshold includes the first detected cell quantity threshold and the first serving cell signal quality threshold, and the detection value includes the signal quality of the serving cell and the quantity of detected cells.

In the case 3, that the terminal device determines, based on a value relationship between the detection value and the first threshold, and signal quality of at least one neighboring cell, whether to report the measurement report includes:
In a possible implementation, if the quantity of cells detected by the terminal device is less than or equal to the first detected cell quantity threshold, and the signal quality of the serving cell is less than or equal to the first serving cell signal quality threshold, the terminal device follows the typical RRM measurement mechanism described above. To be specific, when the signal quality of the at least one neighboring cell meets a measurement report triggering condition, the terminal device determines to report the measurement report. In this case, for content that may be included in the measurement report, refer to the possibility 1 in the case 1. Details are not described herein again.

In another possible implementation, if the quantity of cells detected by the terminal device is greater than or equal to the first detected cell quantity threshold, and the signal quality of the serving cell is greater than or equal to the first serving cell signal quality threshold, the terminal device follows the enhanced RRM measurement mechanism described above. To be specific, when signal quality of N neighboring cells all meets a corresponding measurement report triggering condition, the terminal device determines to report the measurement report. In this case, for content that may be included in the measurement report, refer to the possibility 2 in the case 1. Details are not described herein again.

In still another possible implementation, if the quantity of cells detected by the terminal device is less than or equal to the first detected cell quantity threshold, or the signal quality of the serving cell is less than or equal to the first serving cell signal quality threshold, the terminal device follows the typical RRM measurement mechanism described above. To be specific, when the signal quality of the at least one neighboring cell meets a measurement report triggering condition, the terminal device determines to report the measurement report. In this case, for content that may be included in the measurement report, refer to the possibility 1 in the case 1. Details are not described herein again.

In yet another possible implementation, if the quantity of cells detected by the terminal device is greater than or equal to the first detected cell quantity threshold, or the signal quality of the serving cell is greater than or equal to the first serving cell signal quality threshold, the terminal device follows the enhanced RRM measurement mechanism described above. To be specific, when signal quality of N neighboring cells all meets a corresponding measurement report triggering condition, the terminal device determines to report the measurement report. In this case, for content that may be included in the measurement report, refer to the possibility 2 in the case 1. Details are not described herein again.

In still yet possible implementation, if the quantity of cells detected by the terminal device is greater than or equal to the first detected cell quantity threshold, and the signal quality of the serving cell is less than or equal to the first serving cell signal quality threshold, the following operation is performed: (1) The terminal device may follow the typical RRM measurement mechanism described above. To be specific, when the signal quality of the at least one neighboring cell meets a measurement report triggering condition, the terminal device determines to report the measurement report. In this case, for content that may be included in the measurement report, refer to the possibility 1 in the case 1. Details are not described herein again. (2) Alternatively, the terminal device may follow the enhanced RRM measurement mechanism described above. To be specific, when signal quality of N neighboring cells all meets a corresponding measurement report triggering condition, the terminal device determines to report the measurement report. In this case, for content that may be included in the measurement report, refer to the possibility 2 in the case 1. Details are not described herein again. (3) Alternatively, an implementation depends on the terminal device.

In a further possible implementation, if the quantity of cells detected by the terminal device is less than or equal to the first detected cell quantity threshold, and the signal quality of the serving cell is greater than or equal to the first serving cell signal quality threshold, the following operation is performed: (1) The terminal device may follow the enhanced RRM measurement mechanism described above. To be specific, when signal quality of N neighboring cells all meets a corresponding measurement report triggering condition, the terminal device determines to report the measurement report. In this case, for content that may be included in the measurement report, refer to the possibility 2 in the case 1. Details are not described herein again. (2) Alternatively, the terminal device may follow the typical RRM measurement mechanism described above. To be specific, when the signal quality of the at least one neighboring cell meets a measurement report triggering condition, the terminal device determines to report the measurement report. In this case, for content that may be included in the measurement report, refer to the possibility 1 in the case 1. Details are not described herein again. (3) Alternatively, an implementation depends on the terminal device.

It should be noted that, in this embodiment of this application, a sequence of obtaining the quantity of cells detected by the terminal device and the signal quality of the serving cell is not limited. Alternatively, the quantity of cells detected by the terminal device and the signal quality of the serving cell may be simultaneously obtained.

Optionally, after determining to report the measurement report, the terminal device sends a measurement report corresponding to a first neighboring cell to the network device. After sending the measurement report corresponding to the first neighboring cell, the terminal device starts a first timer. Specifically, if the terminal device follows the typical RRM measurement mechanism, the first neighboring cell is the at least one neighboring cell, and the signal quality of the at least one neighboring cell meets the measurement report triggering condition. If the terminal device follows the enhanced RRM measurement mechanism, the first neighboring cell is at least one of the N neighboring cells, and signal quality of the at least one of the N neighboring cells all meets the corresponding measurement report triggering condition. In this embodiment of this application, a neighboring cell or neighboring cells that the first neighboring cell specifically refers to are not limited.

In a possible implementation, in a validity period of the first timer, the terminal device no longer reports the measurement report (for example, the terminal device may continue to perform measurement, but no longer report the measurement report), or the terminal device stops measurement. In another possible implementation, in a validity period of the first timer, the terminal device detects, through measurement, that signal quality of a second neighboring cell is greater than signal quality of the first neighboring cell included in a currently reported measurement report and a difference therebetween is greater than a preset value (for example, the signal quality of the second neighboring cell is greater than the signal quality of the first neighboring cell by Z dBm). The preset value may be specified in a protocol, may be determined by the terminal device, or may be indicated by the network device (for example, the preset value is included in the measurement configuration information, and the measurement configuration information is sent to the terminal device). This is not limited in this application. In an example, the terminal device may report a measurement report corresponding to the second neighboring cell during a running period of the first timer. For example, once a measurement report triggering condition corresponding to the second neighboring cell is met, the terminal device reports the measurement report corresponding to the second neighboring cell. Alternatively, in another example, the terminal device may report a measurement report corresponding to the second neighboring cell after the first timer expires. For example, when a measurement report triggering condition corresponding to the second neighboring cell is met, after the first timer expires, the terminal device reports the measurement report corresponding to the second neighboring cell. The validity period of the first timer may be specified in the protocol, may be determined by the terminal device, or may be indicated by the network device (for example, the validity period is included in the measurement configuration information, and the measurement configuration information is sent to the terminal device). A manner of determining the validity period of the first timer and duration of the validity period are not limited in this application.

The measurement report may include information such as a measurement result and an identifier of the neighboring cell. Specifically, the measurement report may include related information of a neighboring cell that meets the measurement report triggering condition, for example, a measurement result of the neighboring cell, an identifier of the neighboring cell, an identifier of a beam that belongs to the neighboring cell, and a measurement result of the beam that belongs to the neighboring cell. The related information of the neighboring cell included in the measurement report may be different in different cases. Because the measurement report includes information such as a measurement result of a neighboring cell that triggers reporting of the measurement report, neighboring cells that trigger reporting of the measurement report may be different in different cases. In other words, when the terminal device determines to report the measurement report, reported content may be different in different cases. It should be understood that content included in the measurement report is not limited in this application. For details, refer to a specification in the current protocol, or refer to a specification in a future protocol. This application mainly relates to a case in which the terminal device reports the measurement report when a specific condition is met. It should be further understood that measurement report triggering conditions corresponding to different neighboring cells may be the same or different. This is not limited in this application.

For example, in this embodiment of this application, a beam may be understood as a spatial resource, and may be a transmit or receive precoding vector that has energy transmission directivity. In addition, the transmit or receive precoding vector can be identified by using index information, and the index information may be a correspondingly configured resource identifier (ID) of the terminal device. For example, the index information may be a correspondingly configured identifier or resource of a CSI-RS, may be a correspondingly configured identifier or resource of an SSB, or may be a correspondingly configured identifier or resource of an uplink sounding reference signal (Sounding Reference Signal, SRS). Optionally, the index information may alternatively be index information explicitly or implicitly carried by a signal or a channel that is carried by the beam. The energy transmission directivity may mean that the precoding vector is used to perform precoding processing on a signal that needs to be sent, so that the signal obtained through the precoding processing has specific spatial directivity; a received signal obtained through the precoding processing performed by using the precoding vector has good received power, for example, meets a received demodulation signal-to-noise ratio. The energy transmission directivity may also mean that same signals that are sent from different spatial positions and received by using the precoding vector have different received power.

Further, an embodiment of this application further provides a solution of adjusting a TTT based on signal quality of a serving cell and/or a quantity of detected cells. The following provides detailed descriptions with reference to FIG. 3.

FIG. 3 is a schematic flowchart of a TTT adjustment method according to an embodiment of this application. Execution bodies in the flowchart include a terminal device and a network device.

The radio resource management measurement method includes at least some of the following steps.

S310: The network device sends measurement configuration information to the terminal device.

The measurement configuration information includes a second threshold, a third threshold, and at least one first time to trigger. First times to trigger corresponding to different measurement identifiers, measurement frequencies, or neighboring cells may be the same or different. This is not limited in this application.

It should be understood that the measurement configuration information may include a plurality of pieces of measurement configuration information. The network device may send the plurality of pieces of measurement configuration information to the terminal device at a time, or may separately send the plurality of pieces of measurement configuration information for a plurality of times. This is not limited in this application.

The second threshold includes a second serving cell signal quality threshold and/or a second detected cell quantity threshold, and the third threshold includes a third serving cell signal quality threshold and/or a third detected cell quantity threshold. The second threshold is less than or equal to the third threshold. When the second threshold is equal to the third threshold, only the second threshold or the third threshold may be sent.

A value relationship between a detection value and the second threshold and/or the third threshold is used to determine at least one second time to trigger. For example, the terminal device may determine the second time to trigger based on the detection value, the second threshold, the third threshold, and the first time to trigger. The detection value is similar to the detection value (including the signal quality of the serving cell or the quantity of detected cells) in the foregoing embodiment, and details are not described herein again.

It should be understood that, in addition to the second threshold and third threshold, the measurement configuration information in the embodiment shown in FIG. 3 further includes the measurement identifier, the measurement object, the reporting configuration, the time to trigger, and the like described above. Except the second threshold and the third threshold, information included in the measurement configuration information in the embodiment shown in FIG. 3 is similar to content included in the measurement configuration information specified in a current protocol. Details are not described herein again.

In a possible implementation, there are one or more second thresholds sent by the network device to the terminal device. When there are a plurality of second thresholds sent by the network device to the terminal device, the terminal device may randomly select one second threshold for use.

In another possible implementation, the second threshold may be at a height granularity or at a height interval granularity. That is, the second threshold and a height of the terminal device meet a second correspondence. Different heights, height intervals, or height levels correspond to different second thresholds. The height of the terminal device may be a height relative to the ground, a height relative to a sea level, or a height relative to a reference point. This is not limited in this application.

Optionally, in this implementation, the network device may send a plurality of second thresholds to the terminal device, and each second threshold corresponds to a height, a height interval, or a height level.

When the network device sends the plurality of second thresholds to the terminal device, reference may be made to the foregoing descriptions that the network device sends a plurality of first thresholds to the terminal device. Details are not described herein again.

Optionally, in this implementation, the network device may send one second threshold to the terminal device. As the height changes by one offset, the second threshold may change by one offset accordingly. For details, refer to the foregoing descriptions that the network device sends one first threshold to the terminal device. Details are not described herein again.

Similarly, there are one or more third thresholds sent by the network device to the terminal device. When there are a plurality of third thresholds sent by the network device to the terminal device, the terminal device may randomly select one third threshold for use.

Alternatively, the third threshold may be at the height granularity or at the height interval granularity. That is, the third threshold and the height of the terminal device meet a third correspondence. That is, different heights, height intervals, or height levels correspond to different third thresholds.

Optionally, in this implementation, the network device may send a plurality of third thresholds to the terminal device, and each third threshold corresponds to a height, a height interval, or a height level. When the network device sends the plurality of third thresholds to the terminal device, reference may be made to the foregoing descriptions that the network device sends a plurality of first thresholds to the terminal device. Details are not described herein again.

Optionally, in this implementation, the network device may send one third threshold to the terminal device. As the height changes by one offset, the third threshold may change by one offset accordingly. For details, refer to the foregoing descriptions that the network device sends one first threshold to the terminal device. Details are not described herein again.

Further, after receiving the measurement configuration information, the terminal device determines the at least one second time to trigger. That is, the method procedure shown in FIG. 3 further includes S320: The terminal device determines the at least one second time to trigger.

Optionally, when the measurement configuration information includes a plurality of height-related second thresholds and/or third thresholds, or the measurement configuration information includes one second threshold and/or third threshold and the second threshold and/or the third threshold change/changes as the height changes, after receiving the measurement configuration information, the terminal device may determine an appropriate second threshold and/or third threshold based on the height of the terminal device.

Alternatively, optionally, when the measurement configuration information includes a plurality of second thresholds (which are not related to the height), after receiving the measurement configuration information, the terminal device may randomly determine an appropriate second threshold; and/or when the measurement configuration information includes a plurality of third thresholds (which are not related to the height), after receiving the measurement configuration information, the terminal device may randomly determine an appropriate third threshold.

Further, after determining the appropriate second threshold and/or third threshold, the terminal device may determine the second time to trigger by using the appropriate second threshold and/or third threshold.

For example, that the terminal device determines, based on the detection value (for example, the detection value may be the signal quality of the serving cell and/or the quantity of detected cells) and the second threshold and/or the third threshold (when the detection value is the signal quality of the serving cell, the second threshold and/or the third threshold are/is the first serving cell signal quality threshold; when the detection value is the quantity of detected cells, the second threshold and/or the third threshold are/is the first detected cell quantity threshold; when the detection value is the signal quality of the serving cell and the quantity of detected cells, the second threshold and/or the third threshold are/is the first serving cell signal quality threshold and the first detected cell quantity threshold), the at least one second time to trigger includes the following several cases:

### Case 1:

The second threshold includes the second serving cell signal quality threshold, the third threshold includes the third serving cell signal quality threshold, and the detection value includes the signal quality of the serving cell. The second threshold is less than or equal to the third threshold.

Optionally, the second serving cell signal quality threshold may include a second threshold for cell signal quality and/or a second threshold for beam signal quality.

Optionally, the third serving cell signal quality threshold may include a third threshold for cell signal quality and/or a third threshold for beam signal quality.

In the case 1, that the terminal device determines the at least one second time to trigger based on the value relationship between the detection value and the second threshold and/or the third threshold includes:

When the signal quality of the serving cell is less than the second serving cell signal quality threshold, the terminal device determines that the second time to trigger is a time to trigger shorter than the first time to trigger.

When the signal quality of the serving cell is greater than the third serving cell signal quality threshold, the terminal device determines that the second time to trigger is a time to trigger longer than the first time to trigger.

When the signal quality of the serving cell is greater than or equal to the second serving cell signal quality threshold and less than or equal to the third serving cell signal quality threshold, the terminal device determines that the second time to trigger is a time to trigger equal to the first time to trigger.

### Case 2:

The second threshold includes the second detected cell quantity threshold, the third threshold includes the third detected cell quantity threshold, and the detection value includes the quantity of detected cells. The second threshold is less than or equal to the third threshold.

In the case 2, that the terminal device determines the at least one second time to trigger based on the value relationship between the detection value and the second threshold and/or the third threshold includes:
When the quantity of detected cells is less than the second detected cell quantity threshold, the terminal device determines that the second time to trigger is a time to trigger shorter than the first time to trigger.

When the quantity of detected cells is greater than the third detected cell quantity threshold, the terminal device determines that the second time to trigger is a time to trigger longer than the first time to trigger.

When the quantity of detected cells is greater than or equal to the second detected cell quantity threshold and less than or equal to the third detected cell quantity threshold, the terminal device determines that the second time to trigger is a time to trigger equal to the first time to trigger.

### Case 3:

The second threshold includes the second detected cell quantity threshold and the second serving cell signal quality threshold, the third threshold includes the third detected cell quantity threshold and the third serving cell signal quality threshold, and the detection value includes the quantity of detected cells and the signal quality of the serving cell. The second detected cell quantity threshold is less than or equal to the third detected cell quantity threshold, and the second serving cell signal quality threshold is less than or equal to the third serving cell signal quality threshold.

In the case 3, that the terminal device determines the at least one second time to trigger based on the value relationship between the detection value and the second threshold and/or the third threshold includes:

In a possible implementation, when the quantity of detected cells is less than the second detected cell quantity threshold, and the signal quality of the serving cell is less than the second serving cell signal quality threshold, the terminal device determines that the second time to trigger is a time to trigger shorter than the first time to trigger.

When the quantity of detected cells is greater than the third detected cell quantity threshold, and the signal quality of the serving cell is greater than the third serving cell signal quality threshold, the terminal device determines that the second time to trigger is a time to trigger longer than the first time to trigger.

When the quantity of detected cells is greater than or equal to the second detected cell quantity threshold and less than or equal to the third detected cell quantity threshold, and the signal quality of the serving cell is greater than or equal to the second serving cell signal quality threshold and less than or equal to the third serving cell signal quality threshold, the terminal device determines that the second time to trigger is a time to trigger equal to the first time to trigger.

In another possible implementation, when the quantity of detected cells is less than the second detected cell quantity threshold, or the signal quality of the serving cell is less than the second serving cell signal quality threshold, the terminal device determines that the second time to trigger is a time to trigger shorter than the first time to trigger.

When the quantity of detected cells is greater than the third detected cell quantity threshold, or the signal quality of the serving cell is greater than the third serving cell signal quality threshold, the terminal device determines that the second time to trigger is a time to trigger longer than the first time to trigger.

When the quantity of detected cells is greater than or equal to the second detected cell quantity threshold and less than or equal to the third detected cell quantity threshold, or the signal quality of the serving cell is greater than or equal to the second serving cell signal quality threshold and less than or equal to the third serving cell signal quality threshold, the terminal device determines that the second time to trigger is a time to trigger equal to the first time to trigger.

In a possible implementation, determining that the second time to trigger is the time to trigger longer than the first time to trigger includes: determining that the second time to trigger is a product of the first time to trigger and P, where P is a positive number greater than 1, and P may be specified in a protocol, may be determined by the terminal device, or may be indicated by the network device (for example, P is included in the measurement configuration information and the measurement configuration information is sent to the terminal device).

Optionally, P and the height of the terminal device meet a fifth correspondence. That is, P is at the height granularity, at the height interval granularity, or at a height level granularity. Different heights, height intervals, or height levels correspond to different P values.

For example, the protocol specifies three P values (for example, P #1, P #2, and P #3). P #1 corresponds to a height interval #1 (or when the height is less than a height #1, a corresponding scaling value is P #1). In this case, when the height of the terminal device belongs to the height interval #1 (or is less than the height #1), P #1 is used. P #2 corresponds to a height interval #2 (or when the height is greater than the height #1 and less than a height #2, a corresponding scaling value is P #2). In this case, when the height of the terminal device belongs to the height interval #2 (or the height of the terminal device is greater than the height #1 and less than the height #2), P #2 is used. P #3 corresponds to a height interval #3 (or when the height is greater than the height #2, a corresponding scaling value is P #3). In this case, when the height of the terminal device belongs to the height interval #3 (or the height of the terminal device is greater than the height #2), P #3 is used. The height #1 is less than or equal to the height #2. The height #1 and the height #2 may be included in the foregoing measurement configuration information.

Alternatively, for another example, the measurement configuration information may include height interval information. In an example, the measurement configuration information may include information about a height interval #1, information about a height interval #2, and information about a height interval #3. The height interval #1 is [H1, H2], the height interval #2 is [H3, H4], and the height interval #3 is [H5, H6]. In addition, the measurement configuration information further includes P #1, P #2, and P #3. When the height of the terminal device belongs to the height interval #1, the terminal device uses P #1. When the height of the terminal device belongs to the height interval #2, the terminal device uses P #2. When the height of the terminal device belongs to the height interval #3, the terminal device uses P #3. P #1, P #2, and P #3 are all positive numbers greater than 1.

In another possible implementation, determining that the second time to trigger is the time to trigger longer than the first time to trigger includes: determining that the second time to trigger is the first time to trigger plus a first preset offset. The first preset offset may be specified in the protocol, may be determined by the terminal device, or may be indicated by the network device (for example, the first preset offset is included in the measurement configuration information and the measurement configuration information is sent to the terminal device). It may be understood that the first preset offset is greater than or equal to 0. Optionally, the first preset offset and the height of the terminal device meet a sixth correspondence. That is, the first preset offset is at the height granularity, at the height interval granularity, or at a height level granularity. Different heights, height intervals, or height levels correspond to different first preset offsets.

In a possible implementation, determining that the second time to trigger is the time to trigger shorter than the first time to trigger includes: determining that the second time to trigger is a product of the first time to trigger and Q, where Q is a positive number less than 1, and Q may be specified in the protocol, may be determined by the terminal device, or may be indicated by the network device (for example, Q is included in the measurement configuration information and measurement configuration information is sent to the terminal device).

Optionally, Q and the height of the terminal device meet a fourth correspondence. That is, Q is at the height granularity, at the height interval granularity, or at the height level granularity. Different heights, height intervals, or height levels correspond to different Q values. In this case, refer to the foregoing descriptions of the plurality of P values. Details are not described herein again.

In another possible implementation, determining that the second time to trigger is the time to trigger shorter than the first time to trigger includes: determining that the second time to trigger is the first time to trigger minus a second preset offset. The second preset offset may be specified in the protocol, may be determined by the terminal device, or may be indicated by the network device (for example, the second preset offset is included in the measurement configuration information and the measurement configuration information is sent to the terminal device).

In a possible implementation, determining that the second time to trigger is the time to trigger equal to the first time to trigger includes: determining that the second time to trigger is a product of the first time to trigger and K, where K is equal to 1.

In another possible implementation, determining that the second time to trigger is the time to trigger equal to the first time to trigger includes: skipping adjusting the first time to trigger. In other words, a coefficient K may not exist, that is, K does not need to be specified in the protocol or indicated by the network device. That is, the first time to trigger is directly used as the second time to trigger.

For ease of understanding, an example in which the measurement configuration information includes the second thresholds (for example, a second threshold #1, a second threshold #2, and a second threshold #3), the third thresholds (for example, a third threshold #1, a third threshold #2, and a third threshold #3), the height #1, the height #2, Q values (for example, Q #1, Q #2, and Q #3), and P values (for example, P #1, P #2, and P #3) is used to describe how to adjust the first time to trigger. In this example, further, an example in which the second threshold is the second serving cell signal quality threshold and the third threshold is the third serving cell signal quality threshold is used for description.

When the height of the terminal device is less than the height #1, used signal quality thresholds are the second threshold #1 and the third threshold #1. If the signal quality of the serving cell is greater than or equal to the third threshold #1, a used scaling value is P #1. That is, a second time to trigger actually used by the terminal device is obtained by multiplying the first time to trigger by P #1. If the signal quality of the serving cell is less than or equal to the second threshold #1, a used scaling value is Q #1. That is, a second time to trigger actually used by the terminal device is obtained by multiplying the first time to trigger by Q #1. If the signal quality of the serving cell is greater than the second threshold #1 and less than the third threshold #1, a second time to trigger actually used by the terminal device is the first time to trigger.

When the height of the terminal device is greater than the height #1 and less than the height #2, used signal quality thresholds are the second threshold #2 and the third threshold #2. If the signal quality of the serving cell is greater than or equal to the third threshold #2, a used scaling value is P #2. That is, a second time to trigger actually used by the terminal device is obtained by multiplying the first time to trigger by P #2. If the signal quality of the serving cell is less than or equal to the second threshold #2, a used scaling value is Q #2. That is, a second time to trigger actually used by the terminal device is obtained by multiplying the first time to trigger by Q #2. If the signal quality of the serving cell is greater than the second threshold #2 and less than the third threshold #2, a second time to trigger actually used by the terminal device is the first time to trigger.

When the height of the terminal device is greater than the height #2, used signal quality thresholds are the second threshold #3 and the third threshold #3. If the signal quality of the serving cell is greater than or equal to the third threshold #3, a used scaling value is P #3. That is, a second time to trigger actually used by the terminal device is obtained by multiplying the first time to trigger by P #3. If the signal quality of the serving cell is less than or equal to the second threshold #3, a used scaling value is Q #3. That is, a second time to trigger actually used by the terminal device is obtained by multiplying the first time to trigger by Q #3. If the signal quality of the serving cell is greater than the second threshold #3 and less than the third threshold #3, a second time to trigger actually used by the terminal device is the first time to trigger.

Optionally, after the second time to trigger is obtained by adjusting the first time to trigger, when N neighboring cells all meet a corresponding measurement report triggering condition in a corresponding second time to trigger, the terminal device determines to report a measurement report.

In the method embodiment shown in FIG. 3, a solution of adjusting a TTT based on the signal quality of the serving cell and/or the quantity of detected cells is provided, so that the terminal device can appropriately report the measurement report. On the one hand, when the signal quality of the serving cell is poor and/or the quantity of detected cells is small, the TTT is shortened, so that the terminal device can quickly report the measurement report, thereby avoiding an RLF or too late handover caused because the measurement report is not reported in a timely manner. On the other hand, when the signal quality of the serving cell is good and/or the quantity of detected cells is large, the TTT is extended, so that the terminal device can reduce reporting frequency of the measurement report, thereby avoiding frequent reporting of the measurement report.

It should be understood that the methods shown in FIG. 2 and FIG. 3 may be implemented separately, or may be implemented in combination. That is, when the TTT is adjusted, the terminal device determines, based on the detection value (the detection value is the signal quality of the serving cell and/or the quantity of detected cells) and the first threshold corresponding to the detection value, whether to report the measurement report. When the methods shown in FIG. 2 and FIG. 3 are implemented in combination, the second threshold may be the same as or different from the first threshold (when the first threshold is the same as the second threshold, one of the two thresholds may be configured), or the third threshold may be the same as or different from the first threshold (when the first threshold is the same as the third threshold, one of the two thresholds may be configured). This is not limited in this embodiment.

Sequence numbers of the foregoing processes do not mean execution sequences in the foregoing method embodiments. The execution sequences of the processes should be determined based on functions and internal logic of the processes, and should not be construed as any limitation on the implementation processes of embodiments of this application. In addition, it is possible that not all operations in the foregoing method embodiments need to be performed.

It should be understood that the terminal device and/or the network device in the foregoing method embodiments may perform some or all of the steps in the embodiments. These steps or operations are merely examples. Embodiments of this application may further include performing other operations or variants of various operations.

It may be understood that, in the foregoing method embodiments, the method implemented by the terminal device may also be implemented by a component (for example, a chip or a circuit) used in the terminal device. The method implemented by the network device may also be implemented by a component used in the network device.

It should be further understood that, in embodiments of this application, unless otherwise specified or in case of a logical conflict, terms and/or descriptions in different embodiments may be consistent and may be mutually referenced. Technical features in different embodiments may be combined based on an internal logical relationship of the technical features to form a new embodiment.

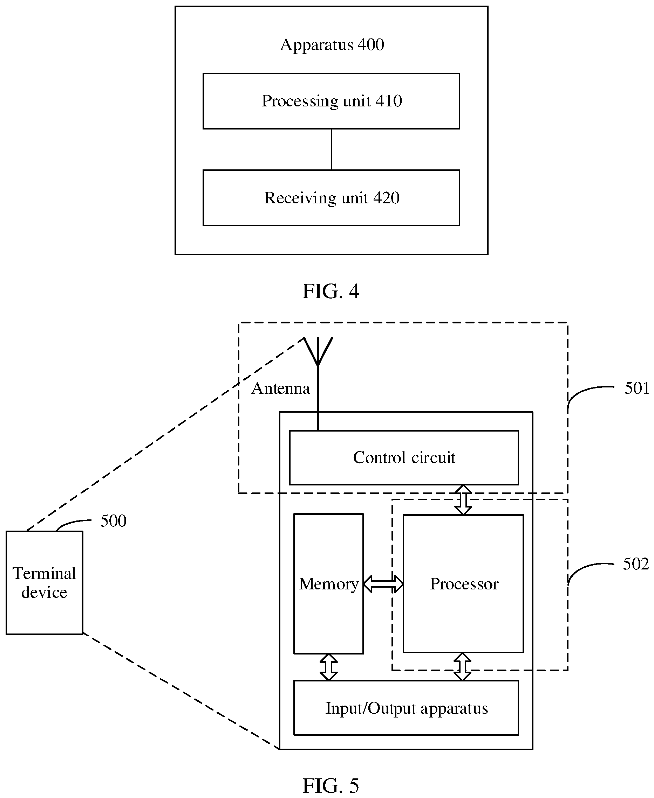

The foregoing describes in detail the radio resource management measurement methods provided in embodiments of this application with reference to FIG. 2 and FIG. 3. The following describes in detail radio resource management measurement apparatuses provided in embodiments of this application with reference to FIG. 4 to FIG. 7.

FIG. 4 is a schematic diagram of a radio resource management measurement apparatus 400 according to this application. As shown in FIG. 4, the apparatus 400 includes a processing unit 410 and a receiving unit 420.

The receiving unit 420 is configured to receive measurement configuration information, where the measurement configuration information includes a first threshold, and the first threshold includes a first serving cell signal quality threshold and/or a first detected cell quantity threshold.

The processing unit 410 is configured to determine, based on a value relationship between a detection value and the first threshold, and signal quality of at least one neighboring cell, whether to report a measurement report.

The apparatus 400 implements functions or steps corresponding to the terminal device in the method embodiments. The apparatus 400 may be the terminal device in the method embodiments, or a chip or a function module in the terminal device in the method embodiments. The corresponding units of the apparatus 400 are configured to perform corresponding steps performed by the terminal device in the method embodiment shown in FIG. 2 or FIG. 3 or the method embodiments shown in FIG. 2 and FIG. 3.

The processing unit 410 in the apparatus 400 is configured to perform a processing-related step. For example, the processing unit 410 performs step S220 of determining whether to report the measurement report in FIG. 2 or step S320 of determining the second time to trigger in FIG. 3.

The receiving unit 420 in the apparatus 400 performs a corresponding receiving step in the method embodiments. For example, the receiving unit 420 performs step S210 of receiving measurement configuration information sent by the network device in FIG. 2 or step S310 of receiving measurement configuration information sent by the network device in FIG. 3.

The apparatus 400 may further include a sending unit, configured to perform a corresponding sending step, for example, send information to another device. The receiving unit 420 and the sending unit may form a transceiver unit, which has both a receiving function and a sending function. The processing unit 410 may be at least one processor. The sending unit may be a transmitter or an interface circuit, and the receiving unit 420 may be a receiver or an interface circuit. The receiver and the transmitter may be integrated to form a transceiver or an interface circuit.

Optionally, the apparatus 400 may further include a storage unit, configured to store data and/or signaling. The processing unit 410, the sending unit, and the receiving unit 420 may interact with or be coupled to the storage unit, for example, read or invoke the data and/or signaling in the storage unit, so that the methods in the foregoing embodiments are performed.

The foregoing units may exist independently, or all or some of the units may be integrated.

FIG. 5 is a schematic diagram of a structure of a terminal device 500 applicable to an embodiment of this application. The terminal device 500 may be used in the system shown in FIG. 1. For ease of description, FIG. 5 shows only main components of the terminal device. As shown in FIG. 5, the terminal device 500 includes a processor, a memory, a control circuit, an antenna, and an input/output apparatus. The processor is configured to control the antenna and the input/output apparatus to send and receive a signal. The memory is configured to store a computer program. The processor is configured to invoke the computer program from the memory and run the computer program, to perform a corresponding procedure and/or operation performed by the terminal device in the registration method provided in this application. Details are not described herein again.

A person skilled in the art may understand that, for ease of description, FIG. 5 shows only one memory and one processor. An actual terminal device may include a plurality of processors and memories. The memory may also be referred to as a storage medium, a storage device, or the like. This is not limited in this embodiment of this application.

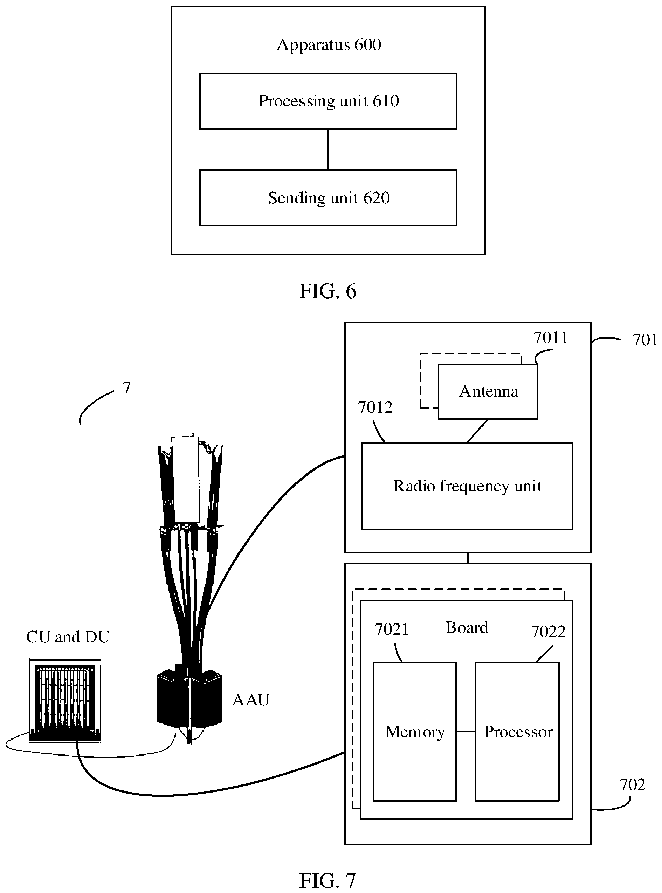

FIG. 6 is a schematic diagram of a radio resource management measurement apparatus 600 according to this application. As shown in FIG. 6, the apparatus 600 includes a processing unit 610 and a sending unit 620.

The processing unit 610 is configured to determine measurement configuration information, where the measurement configuration information includes a first threshold and a threshold N for a quantity of neighboring cells, and the first threshold includes a first serving cell signal quality threshold and/or a first detected cell quantity threshold.

The sending unit 620 is configured to send the measurement configuration information, where a value relationship between the first threshold and a detection value, and signal quality of at least one neighboring cell are used to indicate whether a measurement report can be received.

The apparatus 600 implements functions or steps corresponding to the network device in the method embodiments. The apparatus 600 may be the network device in the method embodiments, or a chip or a function module in the network device in the method embodiments. The corresponding units of the apparatus 600 are configured to perform corresponding steps performed by the network device in the method embodiment shown in FIG. 2 or FIG. 3 or the method embodiments shown in FIG. 2 and FIG. 3.

The processing unit 610 in the apparatus 600 is configured to perform a processing-related step.

The sending unit 620 in the apparatus 600 performs a corresponding sending step in the method embodiments, for example, performs step S210 of sending measurement configuration information to the terminal device in FIG. 2 or step S310 of sending measurement configuration information to the terminal device in FIG. 3.

The apparatus 600 may further include a receiving unit, configured to perform a corresponding receiving step, for example, receive information sent by another device. The receiving unit and the sending unit 620 may form a transceiver unit, which has both a receiving function and a sending function. The processing unit 610 may be at least one processor. The sending unit 620 may be a transmitter or an interface circuit. The receiving unit may be a receiver or an interface circuit. The receiver and the transmitter may be integrated to form a transceiver or an interface circuit.

Optionally, the apparatus 600 may further include a storage unit, configured to store data and/or signaling. The processing unit 610, the sending unit 620, and the receiving unit may interact with or be coupled to the storage unit, for example, read or invoke the data and/or signaling in the storage unit, so that the methods in the foregoing embodiments are performed.

The foregoing units may exist independently, or all or some of the units may be integrated.

FIG. 7 is a schematic diagram of a structure of a network device 700 applicable to an embodiment of this application. The network device 700 may be configured to implement functions of the network device in the paging method. FIG. 7 may be a schematic diagram of a structure of a network device.

In a possible manner, for example, in some implementation solutions in a 5G communication system, the network device 700 may include a CU, a DU, and an AAU. Compared with a case in which a network device in an LTE communication system includes one or more radio frequency units, for example, a remote radio unit (remote radio unit, RRU) and one or more baseband units (baseband units, BBUs):
A non-real-time part of an original BBU is split and redefined as the CU. The CU is responsible for processing a non-real-time protocol and service. Some physical layer processing functions of the BBU are combined with an original RRU and a passive antenna into the AAU, and remaining functions of the BBU are redefined as the DU. The DU is responsible for processing a physical layer protocol and a real-time service. In short, the CU and the DU are distinguished between each other based on real-time performance of processed content, and the AAU is a combination of the RRU and an antenna.

The CU, DU, and AAU may be separated or co-located. Therefore, there are a plurality of network deployment forms. One possible deployment form is consistent with that of a conventional 4G network device, that is, the CU and DU are deployed on a same hardware. It should be understood that FIG. 7 is merely an example and constitutes no limitation on the protection scope of this application. For example, a deployment form may alternatively be that DUs are deployed in a 5G BBU equipment room, CUs or DUs are deployed together, or CUs are centralized at a higher level.

The AAU 701 may implement a transceiver function, is referred to as a transceiver unit 701, and corresponds to the sending unit 620 in FIG. 6. Optionally, the transceiver unit 701 may also be referred to as a transceiver, a transceiver circuit, a transceiver, or the like, and may include at least one antenna 7011 and a radio frequency unit 7012. Optionally, the transceiver unit 701 may include a receiving unit and a sending unit. The receiving unit may correspond to a receiver (or referred to as a receiver or a receiver circuit), and the sending unit may correspond to a transmitter (or referred to as a transmitter or a transmitter circuit). The CU and DU 702 may implement an internal processing function, and is referred to as a processing unit 702. Optionally, the processing unit 702 may control the network device or the like, and may be referred to as a controller. The AAU 701 and the CU and DU 702 may be physically disposed together, or may be physically disposed separately.

In addition, the network device is not limited to the form shown in FIG. 7, and may alternatively be in another form. For example, the network device includes the BBU and an ARU, or includes the BBU and the AAU, or may be a CPE, or may be in another form. This is not limited in this application.

It should be understood that the network device 700 shown in FIG. 7 can implement functions of the network device in the method embodiments in FIG. 2 and FIG. 3. Operations and/or functions of the units in the network device 700 are used to implement a corresponding procedure performed by the network device in the foregoing method embodiments of this application. To avoid repetition, detailed descriptions are appropriately omitted herein. The structure of the network device shown in FIG. 7 is merely a possible form, and should not constitute any limitation on embodiments of this application. In this application, a possibility that there may be a network device structure in another form in the future is not excluded.

An embodiment of this application further provides a communication system. The communication system includes the foregoing terminal device and network device.

This application further provides a computer-readable storage medium. The computer-readable storage medium stores instructions. When the instructions are run on a computer, the computer is enabled to perform the steps performed by the terminal device in the method shown in FIG. 2 or FIG. 3 or the methods shown in FIG. 2 and FIG. 3.

This application further provides a computer-readable storage medium. The computer-readable storage medium stores instructions. When the instructions are run on a computer, the computer is enabled to perform the steps performed by the network device in the method shown in FIG. 2 or FIG. 3 or the methods shown in FIG. 2 and FIG. 3.

This application further provides a computer program product including instructions. When the computer program product runs on a computer, the computer is enabled to perform the steps performed by the terminal device in the method shown in FIG. 2 or FIG. 3 or the methods shown in FIG. 2 and FIG. 3.

This application further provides a computer program product including instructions. When the computer program product runs on a computer, the computer is enabled to perform the steps performed by the network device in the method shown in FIG. 2 or FIG. 3 or the methods shown in FIG. 2 and FIG. 3.

This application further provides a chip, including a processor. The processor is configured to read and run a computer program stored in a memory, to perform corresponding operations and/or procedures performed by the terminal device in the radio resource management measurement method provided in this application. Optionally, the chip further includes the memory, the memory is connected to the processor through a circuit or a wire, and the processor is configured to read and execute the computer program in the memory. Further, optionally, the chip further includes a communication interface, and the processor is connected to the communication interface. The communication interface is configured to receive data and/or information to be processed, and the processor obtains the data and/or information from the communication interface, and processes the data and/or information. The communication interface may be an input/output interface, an interface circuit, an output circuit, an input circuit, a pin, a related circuit, or the like on the chip. The processor may alternatively be embodied as a processing circuit or a logic circuit.

This application further provides a chip, including a processor. The processor is configured to read and run a computer program stored in a memory, to perform corresponding operations and/or procedures performed by the network device in the radio resource management measurement method provided in this application. Optionally, the chip further includes the memory, the memory is connected to the processor through a circuit or a wire, and the processor is configured to read and execute the computer program in the memory. Further, optionally, the chip further includes a communication interface, and the processor is connected to the communication interface. The communication interface is configured to receive data and/or information to be processed, and the processor obtains the data and/or information from the communication interface, and processes the data and/or information. The communication interface may be an input/output interface, an interface circuit, an output circuit, an input circuit, a pin, a related circuit, or the like on the chip. The processor may alternatively be embodied as a processing circuit or a logic circuit.

The foregoing chip may be replaced with a chip system, and details are not described herein.

In this application, terms "include", "contain" and any other variants mean to cover the non-exclusive inclusion, for example, a process, method, system, product, or device that includes a list of steps or units is not necessarily limited to those units, but may include other units not expressly listed or inherent to such a process, method, system, product, or device.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units may be integrated into one unit.

When the functions are implemented in the form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a read-only memory (read-only memory, ROM), a random access memory (random access memory, RAM), a magnetic disk, or a compact disc.

In addition, the term "and/or" in this application describes only an association relationship for describing associated objects and indicates that three relationships may exist. For example, A and/or B may indicate the following three cases: Only A exists, both A and B exist, and only B exists. In addition, the character "/" in this specification generally indicates an "or" relationship between the associated objects. The term "at least one" in this application may indicate "one" and "two or more". For example, at least one of A, B, and C may indicate the following seven cases: Only A exists, only B exists, only C exists, both A and B exist, both A and C exist, both C and B exist, and A, B, and C exist.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A radio resource management measurement method, comprising:
receiving measurement configuration information, wherein the measurement configuration information comprises a first threshold, and the first threshold comprises a first serving cell signal quality threshold and/or a first detected cell quantity threshold ; and
determining, based on a value relationship between a detection value and the first threshold, and signal quality of at least one neighboring cell, whether to report a measurement report.

2. The method according to claim 1, wherein the first threshold comprises the first serving cell signal quality threshold;
the detection value comprises the signal quality of the serving cell; and
the determining, based on a value relationship between a detection value and the first threshold, and signal quality of at least one neighboring cell, whether to report a measurement report comprises:
when the signal quality of the serving cell is less than or equal to the first serving cell signal quality threshold, and the signal quality of the at least one neighboring cell meets a measurement report triggering condition, determining to report the measurement report; or
when the signal quality of the serving cell is greater than or equal to the first serving cell signal quality threshold, and signal quality of N neighboring cells all meets a corresponding measurement report triggering condition, determining to report the measurement report, wherein N is a neighboring cell quantity neighboring cell quantity threshold that is carried in the configuration information.

3. The method according to claim 1 or 2, wherein the first threshold comprises the first detected cell quantity threshold;
the detection value comprises the quantity of detected cells; and
the determining, based on a value relationship between a detection value and the first threshold, and signal quality of at least one neighboring cell, whether to report a measurement report comprises:
when the quantity of detected cells is less than or equal to the first detected cell quantity threshold, and the signal quality of the at least one neighboring cell meets the measurement report triggering condition, determining to report the measurement report; or
when the quantity of detected cells is greater than or equal to the first detected cell quantity threshold, and the signal quality of the N neighboring cells all meets the corresponding measurement report triggering condition, determining to report the measurement report, wherein N is the neighboring cell quantity threshold that is carried in the configuration information.

4. The method according to any one of claims 1 to 3, wherein the first threshold is at a height granularity; and
the method further comprises:
determining the first threshold based on a height of a terminal device.

5. The method according to any one of claims 1 to 4, wherein the measurement configuration information comprises a height threshold.

6. The method according to any one of claims 1 to 5, wherein after the determining to report the measurement report, the method further comprises:
sending a measurement report corresponding to a first neighboring cell;
starting a first timer after sending the measurement report corresponding to the first neighboring cell; and
in a validity period of the first timer, skipping reporting the measurement report, or reporting a measurement report corresponding to a second neighboring cell, wherein signal quality of the second neighboring cell is greater than signal quality of the first neighboring cell.

7. The method according to any one of claims 1 to 6, wherein the measurement configuration information further comprises a second threshold, a third threshold, and a first time to trigger corresponding to the at least one neighboring cell, the second threshold comprises a second serving cell signal quality threshold and/or a second detected cell quantity threshold, and the third threshold comprises a third serving cell signal quality threshold and/or a third detected cell quantity threshold; and
the method further comprises:
determining a second time to trigger based on a value relationship between the detection value and the second threshold and/or the third threshold, wherein the second threshold is less than or equal to the third threshold, the second time to trigger is obtained based on the first time to trigger, and the detection value comprises the signal quality of the serving cell and/or the quantity of detected cells.

8. The method according to claim 7, wherein the determining a second time to trigger based on a value relationship between the detection value and the second threshold and/or the third threshold comprises:
when the detection value is less than the second threshold, determining that the second time to trigger is a time to trigger shorter than the first time to trigger;
when the detection value is greater than the third threshold, determining that the second time to trigger is a time to trigger longer than the first time to trigger; or
when the detection value is greater than or equal to the second threshold and less than or equal to the third threshold, determining that the second time to trigger is a time to trigger equal to the first time to trigger.

9. The method according to claim 8, wherein the determining that the second time to trigger is a time to trigger shorter than the first time to trigger comprises:
determining that the second time to trigger is a product of the first time to trigger and Q, wherein Q is a positive number less than 1;
the determining that the second time to trigger is a time to trigger longer than the first time to trigger comprises:
determining that the second time to trigger is a product of the first time to trigger and P, wherein P is a positive number greater than 1; and
the determining that the second time to trigger is a time to trigger equal to the first time to trigger comprises:
determining that the second time to trigger is a product of the first time to trigger and K, wherein K is equal to 1.

10. The method according to any one of claims 7 to 9, wherein the second threshold and/or the third threshold are/is at the height granularity; and
the method further comprises:
determining the second threshold and/or the third threshold based on the height of the terminal device.

11. A radio resource management measurement method, comprising:
determining measurement configuration information, wherein the measurement configuration information comprises a first threshold, and the first threshold comprises a first serving cell signal quality threshold and/or a first detected cell quantity threshold first detected cell quantity threshold; and
sending the measurement configuration information to a terminal device, wherein the first threshold is used by the terminal device to determine whether to report a measurement report.

12. The method according to claim 11, wherein the first threshold comprises the first serving cell signal quality threshold; and
the method further comprises:
receiving the measurement report from the terminal device, wherein the signal quality of the serving cell is less than or equal to the first serving cell signal quality threshold, and signal quality of at least one neighboring cell meets a measurement report triggering condition; or
receiving the measurement report from the terminal device, wherein the signal quality of the serving cell is greater than or equal to the first serving cell signal quality threshold, signal quality of N neighboring cells all meets a corresponding measurement report triggering condition, and N is a neighboring cell quantity threshold that is carried in the configuration information.

13. The method according to claim 11 or 12, wherein the first threshold comprises the first detected cell quantity threshold; and
the method further comprises:
receiving the measurement report from the terminal device, wherein the quantity of cells detected by the terminal device is less than or equal to the first detected cell quantity threshold, and the signal quality of the at least one neighboring cell meets the measurement report triggering condition; or
receiving the measurement report from the terminal device, wherein the quantity of cells detected by the terminal device is greater than or equal to the first detected cell quantity threshold, the signal quality of the N neighboring cells all meets the corresponding measurement report triggering condition, and N is the neighboring cell quantity threshold that is carried in the configuration information.

14. The method according to any one of claims 11 to 13, wherein the first threshold is at a height granularity.

15. The method according to any one of claims 11 to 14, wherein the measurement configuration information comprises a height threshold.

16. The method according to any one of claims 11 to 15, wherein the measurement configuration information further comprises a second threshold, a third threshold, and a first time to trigger corresponding to the at least one neighboring cell;
the second threshold comprises a second serving cell signal quality threshold and/or a second detected cell quantity threshold, and the third threshold comprises a third serving cell signal quality threshold and/or a third detected cell quantity threshold; and
the second threshold and/or the third threshold are/is used by the terminal device to determine a second time to trigger, the second threshold is less than or equal to the third threshold, and the second time to trigger is obtained based on the first time to trigger.

17. The method according to claim 16, wherein that the second threshold and/or the third threshold are/is used by the terminal device to determine a second time to trigger comprises:
when the detection value is less than the second threshold, the second time to trigger is a time to trigger shorter than the first time to trigger;
when the detection value is greater than the third threshold, the second time to trigger is a time to trigger longer than the first time to trigger; or
when the detection value is greater than or equal to the second threshold and less than or equal to the third threshold, the second time to trigger is a time to trigger equal to the first time to trigger, wherein the detection value comprises the signal quality of the serving cell and/or the quantity of detected cells.

18. The method according to claim 17, wherein that the second time to trigger is a time to trigger shorter than the first time to trigger comprises:
the second time to trigger is a product of the first time to trigger and Q, wherein Q is a positive number less than 1;
that the second time to trigger is a time to trigger longer than the first time to trigger comprises:
the second time to trigger is a product of the first time to trigger and P, wherein P is a positive number greater than 1; and
that the second time to trigger is a time to trigger equal to the first time to trigger comprises:
the second time to trigger is a product of the first time to trigger and K, wherein K is equal to 1.

19. The method according to claim 17 or 18, wherein the second threshold and/or the third threshold are/is at the height granularity.

20. A radio resource management measurement method, comprising:
receiving measurement configuration information from a network device, wherein the measurement configuration information comprises a second threshold, a third threshold, and a first time to trigger corresponding to at least one neighboring cell, the second threshold comprises a second serving cell signal quality threshold and/or a second detected cell quantity threshold, and the third threshold comprises a third serving cell signal quality threshold and/or a third detected cell quantity threshold; and
determining a second time to trigger based on a value relationship between a detection value and the second threshold and/or the third threshold, wherein the second threshold is less than or equal to the third threshold, the second time to trigger is obtained based on the first time to trigger, and the detection value comprises the signal quality of the serving cell and/or the quantity of detected cells.

21. The method according to claim 20, wherein the determining a second time to trigger based on a value relationship between a detection value and the second threshold and/or the third threshold comprises:
when the detection value is less than the second threshold, determining that the second time to trigger is a time to trigger shorter than the first time to trigger;
when the detection value is greater than the third threshold, determining that the second time to trigger is a time to trigger longer than the first time to trigger; or
when the detection value is greater than or equal to the second threshold and less than or equal to the third threshold, determining that the second time to trigger is a time to trigger equal to the first time to trigger.

22. The method according to claim 21, wherein the determining that the second time to trigger is a time to trigger shorter than the first time to trigger comprises:
determining that the second time to trigger is a product of the first time to trigger and Q, wherein Q is a positive number less than 1;
the determining that the second time to trigger is a time to trigger longer than the first time to trigger comprises:
determining that the second time to trigger is a product of the first time to trigger and P, wherein P is a positive number greater than 1; and
the determining that the second time to trigger is a time to trigger equal to the first time to trigger comprises:
determining that the second time to trigger is a product of the first time to trigger and K, wherein K is equal to 1.

23. The method according to any one of claims 20 to 22, wherein the second threshold and/or the third threshold are/is at a height granularity; and
the method further comprises:
determining the second threshold and/or the third threshold based on a height of a terminal device.

24. A radio resource management measurement method, comprising:
determining measurement configuration information, wherein the measurement configuration information comprises a second threshold, a third threshold, and a first time to trigger corresponding to at least one neighboring cell; and
the second threshold comprises a second serving cell signal quality threshold and/or a second detected cell quantity threshold, and the third threshold comprises a third serving cell signal quality threshold and/or a third detected cell quantity threshold; and
sending the measurement configuration information to a terminal device, wherein the second threshold and/or the third threshold are/is used by the terminal device to determine a second time to trigger, the second threshold is less than or equal to the third threshold, and the second time to trigger is obtained based on the first time to trigger.

25. The method according to claim 24, wherein that the second time to trigger is obtained based on the first time to trigger comprises:
the second time to trigger is a product of the first time to trigger and Q, wherein Q is a positive number less than 1;
the second time to trigger is a product of the first time to trigger and P, wherein P is a positive number greater than 1; or
the second time to trigger is a product of the first time to trigger and K, wherein K is equal to 1.

26. The method according to claim 24 or 25, wherein the second threshold and the third threshold are at a height granularity.

27. A radio resource management measurement apparatus, configured to implement the method according to any one of claims 1 to 10 or the method according to any one of claims 20 to 23.

28. A radio resource management measurement apparatus, configured to implement the method according to any one of claims 11 to 19 or the method according to any one of claims 24 to 26.

29. A computer-readable storage medium, wherein the computer-readable medium stores a computer program; and when the computer program is run on a computer, the computer is enabled to perform the method according to any one of claims 1 to 26.

30. A communication system, comprising:
the radio resource management measurement apparatus according to claim 27 and the radio resource management measurement apparatus according to claim 28.
